# EUROPÄISCHE PATENTSCHRIFT

(11) **EP 2 195 790 B1**
(45) Veröffentlichungstag und Bekanntmachung des Hinweises auf die Patenterteilung: **03.05.2017**
(21) Anmeldenummer: 08804739.4
(22) Anmeldetag: 25.09.2008
(51) Int. Cl.: G07C 5/08

(54) **SYSTEM, DAS EINEN TACHOGRAPHEN UND EINE MAUT-ON-BOARD-UNIT ALS KOMMUNIKATIONSPARTNER EINER DATENKOMMUNIKATION UMFASST**
SYSTEM COMPRISING A TACHOGRAPH AND A TOLL ONBOARD UNIT AS DATA COMMUNICATION PARTNERS
SYSTÈME COMPRENANT UN TACHYGRAPHE ET UNE UNITÉ DE PÉAGE EMBARQUÉE COMME PARTENAIRES DE COMMUNICATION DES DONNÉES

(30) Priorität: 28.09.2007 DE 102007046968; 30.11.2007 DE 102007058163
(43) Veröffentlichungstag der Anmeldung: 16.06.2010
(73) Patentinhaber: Continental Automotive GmbH, 30165 Hannover (DE)
(72) Erfinder: GRILL, Thomas, 78048 Villingen-Schwenningen (DE); HESS, Erwin, 85521 Ottobrunn (DE); LO CONTE, Raphael, 78224 Singen (DE); ROMBACH, Gerhard, 78098 Triberg (DE)
(86) Internationale Anmeldenummer: PCT/EP2008/062842
(87) Internationale Veröffentlichungsnummer: WO 2009/043794

(56) Entgegenhaltungen:
- EP-A- 1 538 572
- WO-A-2006/028665
- US-A1- 2005 251 604
- US-B1- 6 823 457
- KERSTIN LEMKE, ANDRE WEIMERSKIRCH AND CHRISTOF PAAR: "Embedded Security in Cars - Securing Current and Future Automotive IT Applications - Part II: "Secure In-Vehicle communication"" [Online] 28. März 2006 (2006-03-28), SPRINGER BERLIN HEIDELBERG , XP002509799 ISBN: 978-3-540-28428-4 Gefunden im Internet: URL:http://www.springerlink.com/content/x8 q6260026m8676m/> [gefunden am 2009-01-08] Seite 95 - Seite 109
- CHRISTOF PAAR AND ANDRE WEIMERSKIRCH: "Embedded security in a pervasive world" INFORMATION SECURITY TECHNICAL REPORT, VOLUME 12, ISSUE 3, [Online] Januar 2007 (2007-01), Seiten 155-161, XP002509797 Elsevier Advanced Technology Publications, Oxford (UK) ISSN: 1363-4127 Gefunden im Internet: URL:http://portal.acm.org/citation.cfm?id= 1298890> [gefunden am 2009-01-12]
- NATIONAL INSTITUTE OF STANDARDS AND TECHNOLOGY - INFORMATION TECHNOLOGY LABORATORY: "The Keyed-Hash Message Authentication Code (HMAC)" FEDERAL INFORMATION PROCESSING STANDARDS PUBLICATION - FIPS PUB 198, [Online] 6. März 2002 (2002-03-06), XP002509798 Gaithersburg, MD (USA) Gefunden im Internet: URL:http://csrc.nist.gov/publications/fips /fips198/fips-198a.pdf> [gefunden am 2009-01-12]

## Beschreibung

Die Erfindung betrifft ein System, das einen Tachographen und eine Maut-On-Board-Unit als Kommunikationspartner einer Datenkommunikation umfasst. Fahrzeuge werden in zunehmendem Maße mit elektronischen Steuergeräten ausgestattet zum Erfassen und Auswerten von Sensorsignalen und/oder zum Steuern von Funktionen des Fahrzeugs. Einige dieser Steuergeräte sind über einen Fahrzeugdatenbus miteinander gekoppelt, der beispielsweise als ein "Controller Area Network", oder kurz: CAN, ausgebildet ist. Steuergeräte senden über diesen Fahrzeugdatenbus Nachrichten, die von anderen Steuergeräten, die an diesem Fahrzeugdatenbus angeschlossen sind, empfangen und ausgewertet werden können. Lastkraftwagen sind mit einem Tachographen und in zunehmendem Maße auch mit einer Maut-On-Board-Unit ausgestattet. Zukünftig könnte auch für Personenkraftwagen eine Ausstattung mit einem Tachographen und einer Maut-On-Board-Unit vorgeschrieben werden.

Die Abhandlung "Secure In-Vehicle Communication" (Marko Wolf et al., 28.03.2006, in "Embedded Security in Cars - Securing Current and Future Automotive IT Applications - Part II) beschreibt ein System für ein Kraftfahrzeug, das mehrere Fahrzeuggeräte mittels eines bidirektionalen Fahrzeugdatenbusses bzw. eines Gateways miteinander verbindet, über den bzw. das die Geräte miteinander kommunizieren und Steuerbefehle bzw. Mess- und Sensorsignale abgeben und empfangen. Zur Gewährleistung der Integrität der von den Geräten gesendeten und empfangenen Nachrichten wird das kryptographische Prüfmittel des MAC eingesetzt.

Die Aufgabe der Erfindung ist, ein System zu schaffen, das zuverlässig und kostengünstig ist.

Die Aufgabe wird gelöst durch die Merkmale des unabhängigen Anspruchs 1. Vorteilhafte Weiterbildungen der Erfindung sind in den Unteransprüchen 1 bis 19 gekennzeichnet.

Die Erfindung zeichnet sich aus durch ein System, das einen Tachographen und eine Maut-On-Board-Unit als Kommunikationspartner einer Datenkommunikation umfasst. Der Tachograph und die Maut-On-Board-Unit umfassen jeweils eine Datenschnittstelle, die als
eine Fahrzeugdatenbusschnittstelle ausgebildet ist, so dass die Datenkommunikation über einen Fahrzeugdatenbus erfolgt, mit dem die Kommunikationspartner koppelbar sind und über den der Tachograph und die Maut-On-Board-Unit miteinander gekoppelt sind. Der Tachograph ist als ein Sender von Daten zum Ermitteln eines kryptographischen Prüfwerts abhängig von Nutzdaten, die über die Datenschnittstelle an den jeweiligen Kommunikationspartner übertragen werden sollen, und zum Senden des kryptographischen Prüfwerts zusätzlich zu den Nutzdaten an den jeweiligen Kommunikationspartner ausgebildet. Die Maut-On-Board-Unit ist als ein jeweiliger Empfänger von Daten zum Empfangen von Nutzdaten und des den Nutzdaten zugehörigen kryptographischen Prüfwerts über die Datenschnittstelle von dem jeweiligen Kommunikationspartner und zum Überprüfen der empfangenen Nutzdaten auf Verfälschungen abhängig von dem empfangenen kryptographischen Prüfwert ausgebildet. Jeder der Kommunikationspartner weist jeweils mindestens einen sicheren Speicher zum Speichern mindestens eines kryptographischen Schlüssels auf. Mindestens einer der Kommunikationspartner ist zum Erzeugen mindestens eines kryptographischen Schlüssels und zum verschlüsselten Versenden des mindestens einen erzeugten kryptographischen Schlüssels an mindestens einen der jeweiligen Kommunikationspartner ausgebildet. Die Kommunikationspartner sind zum Empfangen und Entschlüsseln des mindestens einen verschlüsselten kryptographischen Schlüssels und zum sicheren Speichern des mindestens einen kryptographischen Schlüssels in ihrem jeweiligen sicheren Speicher ausgebildet. Die Kommunikationspartner sind zum Ermitteln des kryptographischen Prüfwerts abhängig von dem mindestens einen kryptographischen Schlüssel ausgebildet. Die Kommunikationspartner sind zum Ermitteln des kryptographischen Prüfwerts als einen Nachrichtenauthentisierungskode abhängig von dem mindestens einen kryptographischen Schlüssel und zum Ermitteln des kryptographischen Prüfwerts als einen gekürzten Nachrichtenauthentisierungskode abhängig von dem mindestens einen kryptographischen Schlüssel ausgebildet. Die Kommunikationspartner sind zum Übertragen des kryptographischen Prüfwerts, jeweils gemeinsam mit den zugehörigen Nutzdaten in einer Nachricht, ausgebildet.

Der Fahrzeugdatenbus ist insbesondere ein allgemeiner Fahrzeugdatenbus, der nicht exklusiv für die Datenkommunikation zwischen dem Tachographen und der Maut-On-Board-Unit vorgesehen ist, sondern der auch vorgesehen ist für die Datenkommunikation anderer Geräteeinheiten in dem Fahrzeug, das heißt zum Beispiel von Steuergeräten, die auch als "Electronic Control Unit", oder kurz: ECU, bezeichnet werden können. Der Fahrzeugdatenbus ist beispielsweise als ein "Controller Area Network", oder kurz: CAN, als "Local Interconnect Network", oder kurz: LIN, oder als "Media Oriented Systems Transport", oder kurz: MOST, ausgebildet. Dadurch kann beispielsweise der sowieso im Fahrzeug vorgesehene allgemeine Fahrzeugdatenbus für die Datenkommunikation zwischen dem Tachographen und der Maut-On-Board-Unit genutzt werden. Dies ist besonders einfach und kostengünstig, da keine separate Datenverbindung erforderlich ist. Es kann jedoch ebenso ein von dem allgemeinen Fahrzeugdatenbus separater Fahrzeugdatenbus vorgesehen sein, mit dem der Tachograph und die Maut-On-Board-Unit für deren Datenkommunikation koppelbar sind.

Das Ermitteln des kryptographischen Prüfwerts erfolgt abhängig von mindestens einem kryptographischen Schlüssel. Das Überprüfen der empfangenen Nutzdaten abhängig von dem empfangenen kryptographischen Prüfwert erfolgt bevorzugt durch erneutes Ermitteln des kryptographischen Prüfwerts abhängig von den empfangenen Nutzdaten durch den jeweiligen Empfänger und durch Vergleich des so ermittelten kryptographischen Prüfwerts mit dem empfangenen kryptographischen Prüfwert. Verfälschungen sind so sehr einfach feststellbar als Abweichung der Prüfwerte voneinander.

Durch Vorsehen des kryptographischen Prüfwerts und durch das Überprüfen der empfangenen Nutzdaten abhängig von dem kryptographischen Prüfwert kann die Datenkommunikation geschützt vor unbefugter Manipulation erfolgen. Dadurch, dass Verfälschungen der jeweils übermittelten Daten empfängerseitig abhängig von dem kryptographischen Prüfwert einfach feststellbar sind, sind die empfangenen Daten vertrauenswürdig, wenn durch die Überprüfung keine Verfälschungen festgestellt werden.

Durch die per kryptographischen Prüfwert gesicherte Datenkommunikation können insbesondere Sensordaten gemeinsam genutzt werden und dadurch Sensoren eingespart werden oder die Zuverlässigkeit durch Redundanz erhöht werden. Das System sowie der Tachograph und die Maut-On-Board-Unit können so besonders zuverlässig oder kostengünstig sein.

In einer vorteilhaften Ausgestaltung umfassen die von dem Tachographen an die Maut-On-Board-Unit zu sendenden und von dieser zu empfangenen Nutzdaten Geschwindigkeitsdaten und/oder Wegstreckendaten und/oder einen aktuellen Kilometerstand, die durch den Tachographen oder durch mit dem Tachographen koppelbare Sensoren erfassbar oder ermittelbar sind, und/oder umfassen Zeitdaten und/oder Identifikationsdaten eines Fahrers und/oder Unternehmens und/oder Fahrzeugs.

Die Identifikationsdaten sind insbesondere solche, die dem Tachographen für dessen Betrieb vorgegeben sind, beispielsweise von dessen Hersteller oder einer Werkstatt, oder beispielsweise per Chipkarte bekannt gemacht werden. Die Chipkarte dient beispielsweise als ein Ausweis des aktuellen Fahrers oder des Unternehmens, das das Fahrzeug nutzt, in dem der Tachograph angeordnet ist. Die Zeitdaten werden beispielsweise mittels einer Echtzeituhr des Tachographen präzise und zuverlässig ermittelt.

Der Vorteil ist, dass die Maut-On-Board-Unit dadurch gegebenenfalls keinen eigenen Sensor für eine Wegstreckenerfassung benötigt, wenn sie die Geschwindigkeitsdaten und/oder Wegstreckendaten und/oder den aktuellen Kilometerstand und/oder Zeitdaten von dem Tachographen erhält und diese aufgrund der Sicherung durch den kryptographischen Prüfwert vertrauenswürdig sind. Insbesondere benötigt die Maut-On-Board-Unit keinen Inertialsensor, das heißt beispielsweise keinen Gyro-Sensor. Ferner kann die Maut-On-Board-Unit so auch auf vertrauenswürdige Identifikationsdaten des Tachographen zugreifen, so dass sie gegebenenfalls auch keine eigenen Einrichtungen zum Erfassen von Identifikationsdaten aufweisen muss. Die Maut-On-Board-Unit kann so besonders kostengünstig ausgebildet sein.

Jedoch können die vertrauenswürdigen Daten des Tachographen auch genutzt werden zum Erhöhen der Zuverlässigkeit, Sicherheit und/oder Präzision, wenn die übermittelten Daten des Tachographen und die von der Maut-On-Board-Unit selbst erfassten oder ermittelten oder von mit dieser gekoppelten Sensoren erfassten oder ermittelten Daten im Wesentlichen redundant sind.

In einer weiteren vorteilhaften Ausgestaltung umfassen die von der Maut-On-Board-Unit an den Tachographen zu sendenden und von diesem zu empfangenen Nutzdaten eine Zeitinformation und/oder eine Positionsinformation einer Positionsermittlungseinheit. Die Positionsermittlungseinheit ist insbesondere ein Empfänger zum Empfangen von Positions- und Zeitinformationen von einem satellitengestützten Positionsermittlungssystem, beispielsweise einem "Global Positioning System", oder kurz: GPS.

In einer weiteren vorteilhaften Ausgestaltung umfasst das System ein Anzeigeinstrument als Kommunikationspartner der Datenkommunikation. Ferner zeichnet sich die Erfindung aus durch ein entsprechendes Anzeigeinstrument. Das Anzeigeinstrument umfasst eine Datenschnittstelle, die als die Fahrzeugdatenbusschnittstelle ausgebildet ist, so dass die Datenkommunikation über den Fahrzeugdatenbus erfolgt, mit dem das Anzeigeinstrument koppelbar ist. Das Anzeigeinstrument ist ausgebildet zum Empfangen von Nutzdaten und des den Nutzdaten zugehörigen kryptographischen Prüfwerts über die Datenschnittstelle von dem jeweiligen Kommunikationspartner und zum Überprüfen der empfangenen Nutzdaten auf Verfälschungen abhängig von dem empfangenen kryptographischen Prüfwert. Der Vorteil ist, dass dem Anzeigeinstrument anzuzeigende Daten vertrauenswürdig, das heißt durch den kryptographischen Prüfwert vor unbefugter Manipulation geschützt, übermittelt werden können. Insbesondere können anzuzeigende Daten der Maut-On-Board-Unit und/oder des Tachographen derartig geschützt übermittelt werden. Dadurch kann gegebenenfalls auf eine eigene Anzeigeeinheit des jeweiligen Kommunikationspartners, insbesondere des Tachographen und/oder der Maut-On-Board-Unit, verzichtet werden. Der jeweilige Kommunikationspartner, insbesondere der Tachograph und/oder die Maut-On-Board-Unit, können so besonders kostengünstig ausgebildet sein.

In diesem Zusammenhang ist es vorteilhaft, wenn das Anzeigeinstrument als Sender von Daten ausgebildet ist zum Ermitteln des kryptographischen Prüfwerts abhängig von Nutzdaten, die über die Datenschnittstelle an den jeweiligen Kommunikationspartner übertragen werden sollen, und zum Senden des kryptographischen Prüfwerts zusätzlich zu den Nutzdaten an den jeweiligen Kommunikationspartner. Beispielsweise umfasst das Anzeigeinstrument auch eine Eingabeeinheit für manuelle Eingaben. Das Anzeigeinstrument ist dann vorzugsweise ausgebildet, dort gemachte Eingaben mit dem jeweiligen kryptographischen Prüfwert versehen sicher und zuverlässig an den jeweiligen Kommunikationspartner zu senden. Dadurch kann gegebenenfalls auf eine eigene Eingabeeinheit des jeweiligen Kommunikationspartners, insbesondere des Tachographen und/oder der Maut-On-Board-Unit, verzichtet werden. Der jeweilige Kommunikationspartner, insbesondere der Tachograph und/oder die Maut-On-Board-Unit, können so besonders kostengünstig ausgebildet sein.

In einer weiteren vorteilhaften Ausgestaltung umfasst das Anzeigeinstrument mindestens einen sicheren Speicher zum Speichern mindestens eines kryptographischen Schlüssels und/oder des aktuellen Kilometerstands und/oder von Identifikationsdaten des Fahrers und/oder Unternehmens und/oder Fahrzeugs und/oder von Einstellungsparametern von Komponenten des Fahrzeugs und/oder von Diagnosedaten des Fahrzeugs. Diese sind so vor unbefugter Manipulation geschützt.

In einer weiteren vorteilhaften Ausgestaltung weist das Anzeigeinstrument mindestens eine Gehäuseschutzeinrichtung auf, durch die ein Öffnen eines Gehäuses des Anzeigeinstruments erkennbar ist. Dies hat den Vorteil, dass dadurch alle Komponenten des Anzeigeinstruments, die innerhalb des Gehäuses angeordnet sind, vor Manipulation geschützt sind. Etwaige Manipulationen sind durch die mindestens eine Gehäuseschutzeinrichtung zuverlässig erkennbar.

In diesem Zusammenhang ist es vorteilhaft, wenn die Gehäuseschutzeinrichtung einen Gehäuseschalter umfasst. Der Gehäuseschalter ist so angeordnet, dass das Öffnen des Gehäuses zuverlässig erkennbar ist, vorzugsweise auch bei abgeschalteter Stromversorgung. Das Vorsehen des Gehäuseschalters hat ferner den Vorteil, dass das Öffnen des Gehäuses elektronisch erfassbar ist und dadurch Gegenmaßnahmen automatisch durchgeführt werden können, wenn das Öffnen des Gehäuses erkannt wurde. Die Gegenmaßnahmen umfassen beispielsweise das Anzeigen eines Warnhinweises, das Einstellen oder Einschränken des Betriebs des Anzeigeinstruments oder des Fahrzeugs oder auch ein Löschen von Daten, die beispielsweise in dem sicheren Speicher gespeichert sind, zum Schutz vor Missbrauch dieser Daten.

In einer weiteren vorteilhaften Ausgestaltung umfasst das Anzeigeinstrument mindestens zwei Datenschnittstellen, die jeweils als die Fahrzeugdatenbusschnittstelle ausgebildet sind. Das Anzeigeinstrument bildet eine Verbindungseinheit für eine Datenkommunikation zwischen Kommunikationspartnern, die mit verschiedenen der mindestens zwei Datenschnittstellen koppelbar sind. Das Anzeigeinstrument ist ausgebildet zum Weitersenden und/oder Überprüfen und/oder Authentisieren von empfangenen Nutzdaten und/oder zum Authentisieren der Kommunikationspartner. Die Datenkommunikation zwischen den Kommunikationspartnern kann so besonders sicher und zuverlässig erfolgen.

In diesem Zusammenhang ist es vorteilhaft, wenn die Nutzdaten, die durch das Anzeigeinstrument überprüfbar beziehungsweise authentisierbar sind, mindestens einen Teil einer ausführbaren Software umfassen oder eine ausführbare Software bilden. Das Anzeigeinstrument kann so dazu genutzt werden, Software-Aktualisierungen, Programme, Software-Funktionen oder Software-Funktionsmodule, die insbesondere von außerhalb des Fahrzeugs einspielbar sind, zu überprüfen und/oder zu authentisieren. Dadurch ist eine besonders hohe Zuverlässigkeit und Sicherheit erreichbar. Insbesondere kann verfälschte, also zum Beispiel fehlerhaft übertragene oder manipulierte, Software erkannt und eine Installation oder Nutzung dieser Software verhindert werden.

In diesem Zusammenhang ist es vorteilhaft, wenn das Anzeigeinstrument ausgebildet ist zum Ausführen der ausführbaren Software. Dadurch ist insbesondere die auf dem Anzeigeinstrument installierte Software aktualisierbar oder ist eine Funktionalität der bereits zuvor installierten Software erweiterbar durch zusätzliche Installation und zusätzliches Ausführen dieser ausführbaren Software. Beispielsweise sind so Anzeigemöglichkeiten des Anzeigeinstruments erweiterbar oder sind Dienste für andere Geräteeinheiten bereitstellbar.

In einer weiteren vorteilhaften Ausgestaltung ist das Anzeigeinstrument ausgebildet zum Weitersenden der ausführbaren Software an mindestens einen der Kommunikationspartner nach erfolgreicher Überprüfung und/oder Authentisierung. Die ausführbare Software kann so in dem vorgesehenen Kommunikationspartner installiert und ausgeführt werden. Insbesondere sind auf diese Weise Software-Aktualisierungen von Geräteeinheiten des Fahrzeugs sicher und zuverlässig möglich.

In einer weiteren vorteilhaften Ausgestaltung bildet das Anzeigeinstrument eine Komforteinrichtungssteuereinheit und/oder eine Diagnoseschnittstelleneinheit und/oder eine Identifikationseinheit zum Identifizieren einer Person und/oder eine Zugangskontrolleinheit und/oder einer Wegfahrsperreinheit oder umfasst einen Teil einer solchen. Dies hat den Vorteil, dass Geräteeinheiten eingespart werden können oder kostengünstiger ausgebildet werden können, wenn deren Funktionalität vollständig oder teilweise durch das Anzeigeinstrument übernommen werden. Das System kann so besonders kostengünstig sein.

In der Ausgestaltung gemäß Anspruch 1 weist jeder der Kommunikationspartner jeweils mindestens einen sicheren Speicher auf zum Speichern mindestens eines kryptographischen Schlüssels. Mindestens einer der Kommunikationspartner ist ausgebildet zum Erzeugen mindestens eines kryptographischen Schlüssels und zum verschlüsselten Versenden des mindestens einen erzeugten kryptographischen Schlüssels an mindestens einen der jeweiligen Kommunikationspartner. Die jeweiligen Kommunikationspartner sind ausgebildet zum Empfangen und Entschlüsseln des mindestens einen verschlüsselten kryptographischen Schlüssels und zum sicheren Speichern des mindestens einen kryptographischen Schlüssels in ihrem jeweiligen sicheren Speicher. Ferner sind die Kommunikationspartner ausgebildet zum Ermitteln des kryptographischen Prüfwerts abhängig von dem mindestens einen kryptographischen Schlüssel.

Der mindestens eine kryptographische Schlüssel umfasst vorzugsweise einen Schlüssel, der für eine Nutzung in einem symmetrischen Verschlüsselungsverfahren vorgesehen ist. Das verschlüsselte Versenden des mindestens einen kryptographischen Schlüssels und das Entschlüsseln von diesem erfolgen vorzugsweise durch Nutzen eines asymmetrischen Verschlüsselungsverfahrens. Dabei erfolgen das Verschlüsseln insbesondere abhängig von einem öffentlichen Schlüssel des jeweiligen Kommunikationspartners und das Entschlüsseln abhängig von dessen privaten Schlüssel. Dadurch kann der mindestens eine kryptographische Schlüssel besonders sicher übermittelt werden. Der mindestens eine übermittelte kryptographische Schlüssel kann jedoch ebenso einen privaten und/oder öffentlichen Schlüssel für eine Nutzung mit einem asymmetrischen Verschlüsselungsverfahren umfassen.

Der jeweilige sichere Speicher ist vorzugsweise als ein elektrisch und/oder mechanisch vor unbefugter Manipulation geschützter Speicher ausgebildet, beispielsweise in einem "Trusted Platform Module", oder kurz: TPM, oder in einem Smart-Card-Controller.

Der kryptographische Prüfwert wird vorzugsweise abhängig von dem mindestens einen kryptographischen Schlüssel unter Nutzung eines symmetrischen Verschlüsselungsverfahrens ermittelt. Bevorzugt erfolgt das Ermitteln des kryptographischen Prüfwerts ferner unter Nutzung einer Blockchiffre oder einer Hash-Funktion. Der kryptographische Prüfwert ist so besonders sicher und ist mit geringem Rechenaufwand ermittelbar. Dadurch können die Kommunikationspartner kostengünstig ausgebildet sein. Ferner ist eine echtzeitfähige Datenkommunikation möglich. Der zum Erzeugen des mindestens einen kryptographischen Schlüssels und zum verschlüsselten Versenden des mindestens einen erzeugten kryptographischen Schlüssels ausgebildete Kommunikationspartner ist insbesondere der Tachograph.

Gemäß Anspruch 1 sind die Kommunikationspartner ausgebildet zum Ermitteln des kryptographischen Prüfwerts als einen Nachrichtenauthentisierungskode abhängig von dem kryptographischen Schlüssel. Der Nachrichtenauthentisierungskode kann auch als "Message Authentication Code", oder kurz: MAC, bezeichnet werden. Ein solcher weist eine hohe Sicherheit vor unbefugter Manipulation auf und ist mit geringem Rechenaufwand und dadurch auch geringen Kosten ermittelbar. Die Datenkommunikation unter Nutzung des kryptographischen Prüfwerts kann dadurch echtzeitfähig sein. Zusätzlich sind die anspruchsgemäßen Kommunikationspartner ausgebildet zum Ermitteln des kryptographischen Prüfwerts als einen gekürzten Nachrichtenauthentisierungskode abhängig von dem kryptographischen Schlüssel. Der gekürzte Nachrichtenauthentisierungskode kann auch als "truncated MAC" oder "Retail-MAC" bezeichnet werden. Der Vorteil ist, dass für den kryptographischen Prüfwert so nur wenige Daten zusätzlich zu den Nutzdaten übertragen werden müssen. Dadurch ist die Buslast gering und sind entsprechend auch die Anforderungen an eine Bandbreite des Übertragungsmediums gering. Ein solcher gekürzter Nachrichtenauthentisierungskode weist eine hohe Sicherheit vor unbefugter Manipulation auf und ist mit geringem Rechenaufwand und dadurch auch geringen Kosten ermittelbar. Die Datenkommunikation unter Nutzung des kryptographischen Prüfwerts kann dadurch echtzeitfähig sein. Gemäß Anspruch 1 sind die Kommunikationspartner ausgebildet zum Übertragen des kryptographischen Prüfwerts jeweils gemeinsam mit den zugehörigen Nutzdaten in einer Nachricht. Dadurch wird das Übertragungsmedium, insbesondere der Fahrzeugdatenbus, nicht oder nur in geringem Maße zusätzlich belastet. Die Bandbreitenanforderungen an das Übertragungsmedium sind dadurch nicht erhöht gegenüber einer ungesicherten Übertragung der Nutzdaten.

In einer weiteren vorteilhaften Ausgestaltung ist jeweils mindestens einer der Kommunikationspartner einer jeweils vorgesehenen Datenkommunikation ausgebildet zum sich Authentisieren gegenüber seinem jeweiligen mindestens einen Kommunikationspartner. Vorzugsweise erfolgt das Authentisieren vor oder in Zusammenhang mit der Übertragung des mindestens einen kryptographischen Schlüssels. Der Vorteil ist, dass die Datenkommunikation durch das Authentisieren auf vertrauenswürdige Kommunikationspartner beschränkt werden kann. Dadurch kann die Datenkommunikation besonders sicher erfolgen.

In einer weiteren vorteilhaften Ausgestaltung sind die Maut-On-Board-Unit und das gegebenenfalls vorgesehene Anzeigeinstrument ausgebildet zum sich Authentisieren gegenüber dem Tachographen. Die Maut-On-Board-Unit und das gegebenenfalls vorgesehene Anzeigeinstrument sind ferner ausgebildet zum Ermöglichen der vertrauenswürdigen Datenkommunikation zwischen dem Tachographen einerseits und der Maut-On-Board-Unit beziehungsweise dem gegebenenfalls vorgesehenen Anzeigeinstrument andererseits und/oder zum Ermöglichen der vertrauenswürdigen Datenkommunikation zwischen der Maut-On-Board-Unit und dem gegebenenfalls vorgesehenen Anzeigeinstrument bei erfolgreicher Authentisierung und zum andernfalls Verhindern der vertrauenswürdigen Datenkommunikation, die auf dem Überprüfen der empfangenen Nutzdaten abhängig von dem zugehörigen empfangenen kryptographischen Prüfwert basiert. Der Tachograph bildet dadurch eine Art zentrale Authentisierungsstelle, die die vertrauenswürdige Datenkommunikation steuert oder kontrolliert. Dadurch kann der Tachograph beispielsweise auch ausgebildet sein zum Erzeugen der kryptographischen Schlüssel und zum Verteilen der Schlüssel an die anderen Geräteeinheiten, wenn diese sich gegenüber dem Tachographen erfolgreich authentisiert haben. Die anderen Geräteeinheiten müssen dann gegebenenfalls nicht ausgebildet sein zum Erzeugen des mindestens einen kryptographischen Schlüssels und können dadurch kostengünstig ausgebildet sein. Vorzugsweise erfolgt das Authentisieren vor oder in Zusammenhang mit der Übertragung des mindestens einen kryptographischen Schlüssels. Der Vorteil ist, dass die Datenkommunikation durch das Authentisieren auf vertrauenswürdige Geräteeinheiten als Kommunikationspartner beschränkt werden kann. Dadurch kann die Datenkommunikation besonders sicher erfolgen.

In einer weiteren vorteilhaften Ausgestaltung ist mindestens einer der Kommunikationspartner ausgebildet zum automatischen erneuten Durchführen des Erzeugens und Übertragens des mindestens einen kryptographischen Schlüssels und des gegebenenfalls vorgesehenen Authentisierens abhängig von einem Eintritt mindestens eines vorgegebenen Ereignisses. Ein solches vorgegebenes Ereignis ist beispielsweise eine Initialisierung des Systems oder mindestens eines der Kommunikationspartner, ein Ablauf eines vorgegebenen Zeitintervalls, zum Beispiel eines Tages oder eines Eichintervalls, ein Abschluss eines Eingriffs in das System oder in mindestens einen der Kommunikationspartner, zum Beispiel wegen Wartungsarbeiten oder Reparatur oder Austausch mindestens eines der Kommunikationspartner, oder ein Aktivieren der Zündung, zum Beispiel durch Drehen des Zündschlüssels. Dadurch ist ein besonders hohes Sicherheitsniveau erreichbar. Dieser mindestens eine Kommunikationspartner ist insbesondere der Tachograph.

In einer weiteren vorteilhaften Ausgestaltung umfasst mindestens einer der Kommunikationspartner eine Schnittstelle zu einer externen Einheit. Dieser mindestens eine Kommunikationspartner ist ausgebildet zum Ermitteln des kryptographischen Prüfwerts abhängig von Nutzdaten, die über die Schnittstelle zu der externen Einheit an die externe Einheit als Kommunikationspartner übertragen werden sollen, und zum Senden des kryptographischen Prüfwerts zusätzlich zu den Nutzdaten an diesen Kommunikationspartner. Der mindestens eine Kommunikationspartner mit der Schnittstelle zu der externen Einheit ist zusätzlich oder alternativ ausgebildet zum Empfangen von Nutzdaten und des den Nutzdaten zugehörigen kryptographischen Prüfwerts von der externen Einheit über die Schnittstelle zu der externen Einheit und zum Überprüfen der empfangenen Nutzdaten auf Verfälschungen abhängig von dem empfangenen kryptographischen Prüfwert. Auf diese Weise ist auch mit der mindestens einen externen Einheit eine vertrauenswürdige Datenkommunikation entsprechend der über den fahrzeuginternen Fahrzeugdatenbus möglich. Bevorzugt ist auch das Authentisieren und das Übermitteln mindestens eines kryptographischen Schlüssels entsprechend vorgesehen in Bezug auf die Datenkommunikation zwischen der Geräteeinheit in dem Fahrzeug, die die Schnittstelle zu der externen Einheit aufweist, und der jeweiligen externen Einheit. Die Datenkommunikation zu oder von der jeweiligen externen Einheit kann drahtgebunden oder drahtlos vorgesehen sein. Die mindestens eine externe Einheit ist beispielsweise ein externes Gerät, beispielsweise für ein Durchführen von Wartungsarbeiten und/oder Messungen und/oder Diagnosen und/oder für ein Einspielen von Software-Aktualisierungen oder Konfigurationsdaten. Die externe Einheit kann jedoch ebenso als ein externer Sender/Empfänger oder als eine Funkbake, zum Beispiel als ein aktives Verkehrszeichen, ausgebildet sein, der beziehungsweise die bevorzugt in Straßennähe aufgestellt ist, zum Beispiel zum Übermitteln von Geschwindigkeitsvorgaben, wie zum Beispiel Richtgeschwindigkeiten, oder Warnungen, zum Beispiel bezüglich eines maximal zulässigen Fahrzeuggewichts oder einer maximal zulässigen Fahrzeughöhe. Es kann auch vorgesehen sein, beispielsweise Identifikationsdaten an die mindestens eine externe Einheit zu senden, zum Beispiel bezüglich des Fahrzeugs oder des Fahrers.

In einer weiteren vorteilhaften Ausgestaltung ist mindestens einer der Kommunikationspartner ausgebildet zum Verschlüsseln der zu sendenden Nutzdaten und mindestens ein anderer der Kommunikationspartner ist ausgebildet zum Entschlüsseln der empfangenen verschlüsselten Nutzdaten. Das Verschlüsseln und Entschlüsseln erfolgt dabei abhängig von mindestens einem der kryptographischen Schlüssel. Der Vorteil ist, dass auf diese Weise auch eine vertrauliche Datenkommunikation möglich ist. Für das Verschlüsseln und das Entschlüsseln kann ein symmetrisches oder ein asymmetrisches Verschlüsselungsverfahren vorgesehen sein.

In einer weiteren vorteilhaften Ausgestaltung umfasst das System eine Verkehrstelematikeinheit und/oder eine Motor-Steuereinheit zum Steuern einer Brennkraftmaschine oder mindestens eines für einen Vortrieb eines Fahrzeugs vorgesehenen Elektromotors und/oder eine Komforteinrichtungssteuereinheit und/oder eine Diagnoseschnittstelleneinheit und/oder eine Identifikationseinheit zum Identifizieren einer Person und/oder eine Zugangskontrolleinheit als Kommunikationspartner der Datenkommunikation. Diese umfassen jeweils eine Datenschnittstelle, die als die Fahrzeugdatenbusschnittstelle ausgebildet ist, so dass die Datenkommunikation über den Fahrzeugdatenbus erfolgt, mit dem die Verkehrstelematikeinheit, die Motor-Steuereinheit, die Komforteinrichtungssteuereinheit, die Diagnoseschnittstelleneinheit, die Identifikationseinheit beziehungsweise die Zugangskontrolleinheit koppelbar ist. Insbesondere kann auch ein Geschwindigkeitsbegrenzer vorgesehen sein, der vorzugsweise zusammen mit der Motor-Steuereinheit ausgebildet ist oder durch diese umfasst ist und der vorzugsweise eine Fahrgeschwindigkeit des Fahrzeugs automatisch abhängig von den jeweils gültigen Geschwindigkeitsvorgaben vorgibt, die beispielsweise von der mindestens einen externen Einheit, zum Beispiel von dem aktiven Verkehrszeichen, übermittelt wurden.

Ausführungsbeispiele der Erfindung sind im Folgenden anhand der schematischen Zeichnungen erläutert. Es zeigen:
- Figur 1: ein System umfassend einen Tachographen und eine Maut-On-Board-Unit,
- Figur 2A: den Tachographen,
- Figur 2B: die Maut-On-Board-Unit,
- Figur 2C: ein Anzeigeinstrument,
- Figur 3: ein Ablaufdiagramm eines Authentisierungsvorgangs,
- Figur 4A: ein Ablaufdiagramm einer ersten Ausführungsform eines Datenübertragungsvorgangs,
- Figur 4B: ein Ablaufdiagramm einer nicht beanspruchten Ausführungsform des Datenübertragungsvorgangs,
- Figur 5: ein Aufbau einer Nachricht und
- Figur 6: das System mit dem Anzeigeinstrument.

Elemente gleicher Konstruktion oder Funktion sind figurenübergreifend mit den gleichen Bezugszeichen versehen.

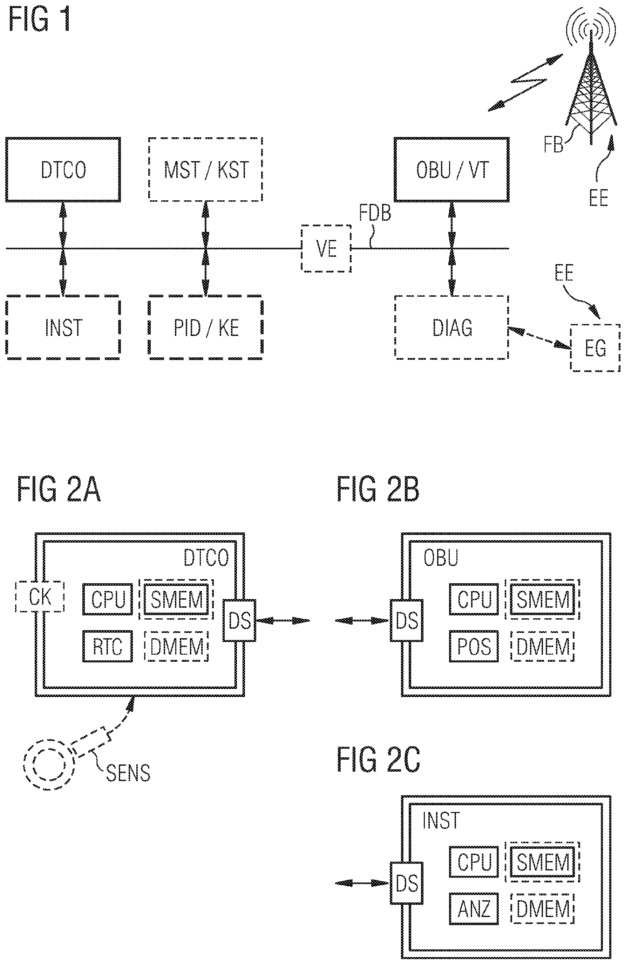

Ein System umfasst einen digitalen Tachographen DTCO und eine Maut-On-Board-Unit OBU als Geräteeinheiten, die über mindestens einen Fahrzeugdatenbus FDB miteinander gekoppelt sind (Figur 1). Der mindestens eine Fahrzeugdatenbus FDB ist insbesondere als ein Datenbus entsprechend einem "Controller Area Network", oder kurz: CAN, oder einem anderen Datenbus für Kraftfahrzeuge ausgebildet, zum Beispiel einem "Local Interconnect Network", oder kurz: LIN, oder einem "Media Oriented Systems Transport", oder kurz: MOST. Der mindestens eine Fahrzeugdatenbus FDB steht bevorzugt allgemein Geräteeinheiten des Kraftfahrzeugs für ihre Datenkommunikation zur Verfügung, das heißt, der Fahrzeugdatenbus FDB ist bevorzugt nicht speziell und ausschließlich für die Datenkommunikation zwischen dem Tachographen DTCO und der Maut-On-Board-Unit OBU ausgebildet und vorgesehen. Ein solcher allgemeiner Fahrzeugdatenbus FDB ist im Allgemeinen in jedem Kraftfahrzeug vorgesehen, so dass der Tachograph DTCO und die Maut-On-Board-Unit OBU lediglich mit diesem gekoppelt werden müssen, um die Datenkommunikation zwischen diesen Geräteeinheiten zu ermöglichen.

Es können jedoch auch zwei oder mehr als zwei Fahrzeugdatenbusse FDB in dem Kraftfahrzeug vorgesehen sein. Der Tachograph DTCO und die Maut-On-Board-Unit OBU sind dann beispielsweise nur mit einem der Fahrzeugdatenbusse FDB des Kraftfahrzeugs gekoppelt. Sie können jedoch auch mit zwei oder mehr als zwei Fahrzeugdatenbussen FDB gekoppelt sein. Insbesondere kann es vorteilhaft sein, wenn der Tachograph DTCO mit mindestens zwei der Fahrzeugdatenbusse FDB gekoppelt ist. Aufgrund der Hoheit des Fahrzeugherstellers über zumindest einen der Fahrzeugdatenbusse FDB sind gegebenenfalls keine Geräteeinheiten von Fremdherstellern an diesem zugelassen. Beispielsweise darf gegebenenfalls die Maut-On-Board-Unit OBU nicht mit einem der unter der Hoheit des Fahrzeugherstellers stehenden Fahrzeugdatenbusse FDB gekoppelt werden. Die Geräteeinheiten der Fremdhersteller und insbesondere die Maut-On-Board-Unit OBU müssen deshalb gegebenenfalls an einen zusätzlich vorgesehenen Fahrzeugdatenbus FDB angeschlossen werden. Der Tachograph DTCO muss dann jedoch gegebenenfalls mit den zwei oder mehr als zwei Fahrzeugdatenbussen FDB verbunden sein, um sowohl mit Geräteeinheiten kommunizieren zu können, die unter der Hoheit des Fahrzeugherstellers stehen, wie beispielsweise eine Motor-Steuereinheit MST, als auch mit Geräteeinheiten kommunizieren zu können, die nicht unter der Hoheit des Fahrzeugherstellers stehen, wie beispielsweise die Maut-On-Board-Unit OBU und/oder eine Diagnoseschnittstelleneinheit DIAG.

Das System kann neben dem Tachographen DTCO und der Maut-On-Board-Unit OBU ferner auch ein Anzeigeinstrument INST und/oder eine Verkehrstelematikeinheit VT und/oder eine Identifikationseinheit PID und/oder eine Zugangskontrolleinheit KE und/oder die Motor-Steuereinheit MST und/oder eine Komforteinrichtungssteuereinheit KST und/oder eine Wegfahrsperreinheit und/oder die Diagnoseschnittstelleneinheit DIAG als Geräteeinheiten umfassen und/oder auch weitere Geräteeinheiten des Kraftfahrzeugs umfassen, die mit dem mindestens einen Fahrzeugdatenbus FDB gekoppelt sind. Das Anzeigeinstrument INST ist beispielsweise vorgesehen zum Anzeigen einer aktuellen Geschwindigkeit des Kraftfahrzeugs und/oder einer zurückgelegten Wegstrecke und/oder eines aktuellen Kilometerstands, die dem Anzeigeinstrument INST zum Beispiel durch den Tachographen DTCO über einen der gegebenenfalls mehreren Fahrzeugdatenbusse FDB übermittelt werden. Das Anzeigeinstrument kann ferner auch vorgesehen sein zum Anzeigen von Arbeitszeitdaten oder anderen Daten, die durch den Tachographen DTCO in Bezug auf den jeweiligen Fahrer des Kraftfahrzeugs erfasst werden, und/oder von Diagnoseinformationen und/oder fahrzeugsicherheitsrelevanten Informationen. Das Anzeigeinstrument INST ist vorzugsweise ferner vorgesehen zum Anzeigen von Informationen der Maut-On-Board-Unit OBU, zum Beispiel einer Achszahl und/oder von Identifikationsdaten des Kraftfahrzeugs und/oder des Fahrers.

Die Verkehrstelematikeinheit VT ist beispielsweise vorgesehen zum Empfangen von Geschwindigkeitsvorgaben oder anderen verkehrsrelevanten Informationen von stationären oder mobilen Funkbaken FB, zum Beispiel aktiven Verkehrszeichen, und/oder Satelliten und/oder anderen Fahrzeugen und/oder externen Sendern/Empfängern, beispielsweise eines Maut-Erfassungssystems. Die Funkbaken FB und die externen Sender/Empfänger können auch als "Street-Terminals" bezeichnet werden und/oder ausgebildet sein. Es kann auch vorgesehen sein, Informationen an andere Fahrzeuge und/oder die externen Sender/Empfänger zu senden. Ferner kann vorgesehen sein, beispielsweise die Identifikationsdaten des Kraftfahrzeugs und/oder des Fahrers und/oder die aktuelle Geschwindigkeit und/oder Informationen über die zurückgelegte Wegstrecke, die mittels des Tachographen DTCO und/oder der Maut-On-Board-Unit OBU erfasst oder ermittelt werden, an den jeweiligen externen Sender/Empfänger, insbesondere des Maut-Erfassungssystems, zu senden. Der externe Sender/Empfänger ist beispielsweise als eine Mobilfunk-Basisstation gemäß "Global System for Mobile Communications", oder kurz: GSM, ausgebildet. Der externe Sender/Empfänger kann jedoch auch anders ausgebildet sein. Die Verkehrstelematikeinheit VT kann als eine separate Geräteeinheit ausgebildet sein oder kann zusammen mit einer anderen Geräteeinheit ausgebildet sein, vorzugsweise zusammen mit der Maut-On-Board-Unit OBU.

Die Identifikationseinheit PID und die Zugangskontrolleinheit KE sind insbesondere vorgesehen zum Identifizieren des Fahrers und zum Kontrollieren eines Zugangs zu dem Kraftfahrzeug und/oder zu dessen Funktionen. Das Identifizieren erfolgt beispielsweise abhängig von biometrischen Merkmalen, so dass ein mechanischer Schlüssel gegebenenfalls nicht erforderlich ist für das Gewähren des Zugangs. Die Zugangskontrolle kann daher auch als "Keyless Entry" bezeichnet werden. Die Identifikationseinheit PID und die Zugangskontrolleinheit KE können jedoch auch anders ausgebildet sein, zum Beispiel zum Identifizieren und Gewähren des Zugangs abhängig von einer Chipkarte, einem Fahrzeugschlüssel oder ähnlichem, mit der beziehungsweise mit dem beispielsweise drahtlos kommuniziert werden kann. Die Identifikationseinheit PID und/oder die Zugangskontrolleinheit KE sind beispielsweise Teil eines Türschlosssystems des Kraftfahrzeugs. Die Identifikationseinheit PID und die Zugangskontrolleinheit KE können auch als eine gemeinsame Geräteeinheit ausgebildet sein.

Die Motor-Steuereinheit MST ist insbesondere vorgesehen zum Steuern einer Brennkraftmaschine des Kraftfahrzeugs und/oder zum Steuern mindestens eines Elektromotors des Kraftfahrzeugs, der für dessen Vortrieb vorgesehen ist. Die Motor-Steuereinheit MST kann auch ausgebildet sein, die empfangenen Geschwindigkeitsvorgaben durch entsprechende Drosselung der Geschwindigkeit des Kraftfahrzeugs umzusetzen, das heißt die Funktion eines Geschwindigkeitsbegrenzers zu erfüllen. Es kann jedoch ebenso ein separater Geschwindigkeitsbegrenzer vorgesehen sein, der mit dem mindestens einen Fahrzeugdatenbus FDB gekoppelt ist.

Die Komforteinrichtungssteuereinheit KST ist beispielsweise vorgesehen zum Steuern von Komforteinrichtungen des Kraftfahrzeugs. Beispielsweise kann vorgesehen sein, Sitzeinstellungen und andere personenbezogene Einstellungen, zum Beispiel in Bezug auf eine Einstellung von Rück- oder Seitenspiegel, einer Klimaanlage oder einem Radio oder anderen Medien, abhängig von den Identifikationsdaten, die mittels des Tachographen DTCO, der Maut-On-Board-Unit OBU oder der Identifikationseinheit PID erfasst oder ermittelt werden, automatisch einzustellen.

Die Diagnoseschnittstelleneinheit DIAG kann vorgesehen sein zum Ermöglichen eines Anschlusses von externen Geräten EG für Diagnose- und/oder Wartungszwecke und/oder für ein Einspielen von Software-Aktualisierungen und/oder für ein Durchführen von Messungen, insbesondere in Bezug auf Emissionen des Kraftfahrzeugs und/oder für ein Einstellen von Parametern oder Aktualisieren von Konfigurationen der Geräteeinheiten oder des Kraftfahrzeugs, beispielsweise in Bezug auf die Steuerung der Brennkraftmaschine. Der Anschluss des externen Geräts EG kann drahtgebunden oder drahtlos vorgesehen sein.

Der Fahrzeugdatenbus FDB kann auch eine Verbindungseinheit VE umfassen, die auch als "Gateway" oder "Interface" bezeichnet werden kann. Eine solche Verbindungseinheit VE verbindet zwei oder mehr als zwei Teilbusse des mindestens einen Fahrzeugdatenbusses FDB miteinander, so dass die Teilbusse bezüglich der Datenkommunikation zwischen den jeweils mit diesen Teilbussen gekoppelten Geräteeinheiten einen gemeinsamen Datenbus bilden. Die Verbindungseinheit VE kann auch ausgebildet sein, die Datenkommunikation zwischen den Teilbussen zu übersetzen, beispielsweise wenn die Teilbusse auf unterschiedlichen physikalischen Datenbusarchitekturen beruhen oder unterschiedliche Kommunikationsprotokolle auf den Teilbussen genutzt werden. Ferner kann die Verbindungseinheit VE auch ausgebildet sein, die Datenkommunikation zu filtern, beispielsweise nach zulässigen und unzulässigen Nachrichten MSG. Beispielsweise bildet die Verbindungseinheit VE eine Schnittstelle zwischen demjenigen Teilbus eines der gegebenenfalls mehreren Fahrzeugdatenbusse FDB, mit dem die grundsätzlich in jedem Fahrzeug vorgesehenen Geräteeinheiten gekoppelt sind, die über den Fahrzeugdatenbus FDB kommunizieren sollen, und demjenigen Teilbus dieses Fahrzeugdatenbusses FDB, mit dem optional in dem Fahrzeug vorgesehene Geräteeinheiten koppelbar sind, die über den Fahrzeugdatenbus FDB kommunizieren sollen. Die grundsätzlich in jedem Fahrzeug vorgesehenen Geräteeinheiten unterliegen beispielsweise der Kontrolle oder Hoheit des Fahrzeugherstellers, so dass dieser für eine zulässige und zuverlässige Datenkommunikation zwischen diesen Geräteeinheiten sorgen kann. Die optional vorgesehenen Geräteeinheiten unterliegen jedoch im Allgemeinen nicht der Kontrolle oder Hoheit des Fahrzeugherstellers und können beispielsweise auch durch Fremdanbieter hergestellt und in das System eingefügt werden, so dass es vorteilhaft sein kann, die Datenkommunikation zwischen den Teilbussen des Fahrzeugdatenbusses FDB zu filtern. Durch das Filtern kann beispielsweise sichergestellt werden, dass unzulässige Nachrichten MSG, die beispielsweise die Sicherheit und Zuverlässigkeit des Fahrzeugbetriebs gefährden könnten, nicht weitergeleitet werden.

Es besteht das Bedürfnis, Daten geschützt vor unbefugter Manipulation und gegebenenfalls auch vertraulich von einer der mit dem mindestens einen Fahrzeugdatenbus FDB gekoppelten Geräteeinheiten an eine andere der mit dem mindestens einen Fahrzeugdatenbus FDB gekoppelten Geräteeinheiten zu übertragen. Es wird, anders ausgedrückt, ein vertrauenswürdiger Kommunikationskanal, der auch als "Trusted Channel" bezeichnet werden kann, zwischen den mit einem der gegebenenfalls mehreren Fahrzeugdatenbusse FDB gekoppelten Geräteeinheiten benötigt, so dass zwischen diesen Geräteeinheiten eine vor unbefugter Manipulation geschützte und gegebenenfalls vertrauliche Datenkommunikation möglich ist.

Beispielsweise ermittelt der Tachograph DTCO im Rahmen seiner vorgesehenen Nutzung in dem Kraftfahrzeug Geschwindigkeitsdaten und/oder Wegstreckendaten und/oder den aktuellen Kilometerstand und/oder Zeitdaten. Die Maut-On-Board-Unit OBU benötigt ebenfalls derartige Daten für ein Ermitteln einer zu zahlenden Maut. Die Maut-On-Board-Unit OBU muss diese Daten selbst ermitteln, wenn sie diese nicht in vertrauenswürdiger Form von dem Tachographen DTCO erhält. Dies ist jedoch aufwändig und teuer. Daher ist vorgesehen, die von dem Tachographen DTCO ermittelten Daten der Maut-On-Board-Unit OBU über einen der gegebenenfalls mehreren Fahrzeugdatenbusse FDB zu übermitteln. Um unbefugte Manipulationen der von dem Tachographen DTCO über diesen Fahrzeugdatenbus FDB an die Maut-On-Board-Unit OBU übertragenen Daten erkennen zu können, werden diese Daten geschützt vor unbefugter Manipulation übertragen, also über den virtuellen vertrauenswürdigen Kommunikationskanal. Die durch die Maut-On-Board-Unit OBU von dem Tachographen DTCO empfangenen Daten sind dadurch vertrauenswürdig, so dass die Maut-On-Board-Unit OBU keine eigene Erfassung von Geschwindigkeitsdaten, Wegstreckendaten, Kilometerstand oder Zeit benötigt. Die Maut-On-Board-Unit OBU kann dadurch erheblich preisgünstiger ausgebildet sein.

Noch preisgünstiger und auch kleiner kann die Maut-On-Board-Unit OBU ausgebildet sein, wenn diese das Anzeigeinstrument INST als Anzeige nutzt und dadurch keine eigene Anzeige mehr benötigt. Die Maut-On-Board-Unit OBU ist dann dazu ausgebildet, die anzuzeigenden Daten über den vertrauenswürdigen Kanal über den Fahrzeugdatenbus FDB an das Anzeigeinstrument INST zu senden. Das Anzeigeinstrument INST ist entsprechend dazu ausgebildet, diese Daten von der Maut-On-Board-Unit OBU zu empfangen und auf unbefugte Manipulation zu überprüfen. Die durch das Anzeigeinstrument INST von der Maut-On-Board-Unit OBU empfangenen Daten sind dadurch vertrauenswürdig und können durch das Anzeigeinstrument INST zuverlässig angezeigt werden.

Ferner kann auch vorgesehen sein, Identifikationsdaten eines Fahrers und/oder Unternehmens und/oder des Kraftfahrzeugs und/oder andere Identifikationsdaten über den virtuellen vertrauenswürdigen Kanal von dem Tachographen DTCO an die Maut-On-Board-Unit OBU zu übertragen. Die Identifikationsdaten werden beispielsweise durch den Tachographen DTCO erfasst, zum Beispiel durch Lesen einer entsprechenden Chipkarte, die als ein digitaler Ausweis eines Fahrers des Kraftfahrzeugs und/oder eines Fahrzeughalters dient.

Der Tachograph DTCO umfasst einen sicheren Speicher SMEM, eine Echtzeituhr RTC, mindestens eine Chipkartenleseeinheit, in die eine Chipkarte CK einsteckbar ist, zum Beispiel eine Tachographenkarte oder Werkstattkarte, und vorzugsweise einen Datenspeicher DMEM (Figur 2A). Die Echtzeituhr RTC ist vorzugsweise manipulationssicher in dem Tachographen DTCO angeordnet und ist ausgebildet, zuverlässige und sichere Zeitstempel T zu erzeugen. Die Zeitstempel T sind insbesondere nutzbar für eine Datenaufzeichnung des Tachographen DTCO. Die Echtzeituhr RTC kann vorzugsweise nur von berechtigten Personen eingestellt werden, die sich durch eine entsprechende Chipkarte CK, zum Beispiel durch die Werkstattkarte, gegenüber dem Tachographen DTCO ausweisen können. Der Tachograph DTCO ist mit mindestens einem Sensor SENS koppelbar, insbesondere mit einem Raddrehzahlsensor, zum Erfassen oder Ermitteln einer aktuellen Geschwindigkeit des Kraftfahrzeugs, der zurückgelegten Wegstrecke und/oder des aktuellen Kilometerstands.

Der Tachograph DTCO umfasst ferner mindestens eine Recheneinheit CPU. Die mindestens eine Recheneinheit CPU ist beispielsweise vorgesehen zum Steuern von Funktionen des Tachographen DTCO. Es können auch weitere Recheneinheiten CPU zum Steuern von Funktionen des Tachographen DTCO vorgesehen sein. Die Funktionen des Tachographen DTCO umfassen insbesondere ein Erfassen oder Ermitteln von Daten und ein manipulationssicheres Speichern der erfassten Daten. Die erfassten Daten umfassen beispielsweise Fahrdaten, zum Beispiel die Geschwindigkeit des Kraftfahrzeugs, oder einen Wechsel der Chipkarte CK oder andere Daten, die während des Betriebs des Tachographen erfasst oder ermittelt werden, beispielsweise Fehlermeldungen.

Der sichere Speicher SMEM ist vorzugsweise elektrisch und/oder mechanisch vor Manipulationen der in diesem gespeicherten Daten geschützt. Beispielsweise ist der sichere Speicher SMEM mit einer Schutzschicht oder einem Sicherheitsgitter versehen, die beziehungsweise das elektrisch überwachbar ist. Bei einer Beschädigung der Schutzschicht beziehungsweise des Sicherheitsgitters kann ein Zugriff auf die in dem sicheren Speicher SMEM gespeicherten Daten beispielsweise verhindert werden, zum Beispiel durch Löschen der Daten. Der sichere Speicher SMEM kann jedoch auch anders ausgebildet sein.

Vorzugsweise sind mindestens zwei Recheneinheiten CPU vorgesehen. Eine der mindestens zwei Recheneinheiten CPU bildet eine sichere Recheneinheit SCPU und ist vorgesehen zum Ausführen von kryptographischen Algorithmen, zum Beispiel Verschlüsselungs- und/oder Signaturverfahren, und ist dazu bevorzugt exklusiv mit dem sicheren Speicher SMEM gekoppelt. Diese Recheneinheit CPU und der sichere Speicher SMEM sind vorzugsweise gemeinsam als eine Einheit oder als ein Modul ausgebildet, beispielsweise als ein "Trusted Platform Module", oder kurz: TPM, oder als ein Smart-Card-Controller. Durch Vorsehen eines solchen sicheren Mikrocontrollers mit sicherem Speicher SMEM kann der Tachograph DTCO besonders preisgünstig bei hohem Sicherheitsniveau sein. Ein anderer der mindestens zwei Recheneinheiten CPU ist vorzugsweise vorgesehen zum Steuern des allgemeinen Betriebs des Tachographen. Diese Recheneinheit CPU, die auch als Applikationsrecheneinheit ACPU bezeichnet werden kann, muss keine Sicherheitsfunktionalität aufweisen und nutzt für sicherheitsrelevante Aufgaben die sichere Recheneinheit SCPU, oder umgekehrt, die sichere Recheneinheit SCPU nutzt für nicht sicherheitsrelevante Aufgaben die Applikationsrecheneinheit ACPU. Beispielsweise ist die Applikationsrecheneinheit ACPU vorgesehen für eine Datenverarbeitung in Echtzeit, das heißt beispielsweise in einem Zeitfenster in der Größenordnung von etwa einer Millisekunde. Es kann jedoch auch vorgesehen sein, dass die sichere Recheneinheit SCPU ausgebildet ist zum Erfassen von Sensordaten, beispielsweise von dem Sensor SENS, zum Verarbeiten dieser Daten und zum Speichern oder Bereitstellen dieser Daten unabhängig von der Applikationsrecheneinheit ACPU. Bevorzugt ist vorgesehen, dass die sichere Recheneinheit SCPU die von der Applikationsrecheneinheit ACPU zu verarbeitenden Daten und/oder auszuführenden Programmkode auf unbefugte Manipulationen oder Verfälschungen überprüft, beispielsweise durch Ermitteln und Überprüfen einer digitalen Signatur. Die mindestens eine Recheneinheit CPU kann jedoch auch anders ausgebildet sein. Insbesondere können die Applikationsrecheneinheit ACPU und die sichere Recheneinheit SCPU auch als eine gemeinsame Recheneinheit CPU ausgebildet sein.

Der sichere Speicher SMEM ist insbesondere vorgesehen zum sicheren Speichern mindestens eines kryptographischen Schlüssels. Vorzugsweise ist der sichere Speicher SMEM vorgesehen zum sicheren Speichern mehrerer kryptographischer Schlüssel, insbesondere mindestens eines privaten Schlüssels für die Nutzung von asymmetrischen Verschlüsselungs- und/oder Signaturverfahren und/oder mindestens eines Schlüssels für die Nutzung von symmetrischen Verschlüsselungs- und/oder Signaturverfahren.

Der Tachograph DTCO weist eine sichere und vorzugsweise sicherheitszertifizierte Hardware auf, die eine sichere Umgebung für eine Datenverarbeitung und Datenspeicherung bietet. Durch den sicheren Speicher SMEM ist der Tachograph DTCO ferner geeignet, kryptographische Schlüssel und digitale Zertifikate und andere Daten sicher zu speichern. Dazu ist der Tachograph DTCO ausgebildet, sichere und vorzugsweise sicherheitszertifizierte kryptographische Algorithmen auszuführen, um beispielsweise das sichere Speichern von Daten zu ermöglichen, zum Beispiel durch Ermitteln und Speichern einer digitalen Signatur der Daten. Der Tachograph DTCO umfasst dazu eine kryptographische Funktionseinheit, die beispielsweise durch eine der gegebenenfalls mehreren Recheneinheiten CPU des Tachographen DTCO gebildet ist, insbesondere durch die sichere Recheneinheit SCPU, oder durch diese umfasst ist. Die kryptographische Funktionseinheit oder die sichere Recheneinheit SCPU sind insbesondere durch das TPM oder den Smart-Card-Controller, also den sicheren Mikrokontroller gebildet oder durch diesen umfasst.

Der Tachograph DTCO umfasst vorzugsweise mindestens eine Schutzeinrichtung SE. Die mindestens eine Schutzeinrichtung SE umfasst den sicheren Speicher SMEM und die kryptographische Funktionseinheit oder die sichere Recheneinheit SCPU. Der Tachograph DTCO umfasst vorzugsweise ferner mindestens eine Schutzeinrichtung SE zum Überwachen mindestens eines Betriebsparameters des sicheren Speichers SMEM und/oder der mindestens einen Recheneinheit CPU, insbesondere der kryptographischen Funktionseinheit oder der sicheren Recheneinheit SCPU, und/oder zum Überwachen von deren mechanischer Unversehrtheit. Der mindestens eine Betriebsparameter umfasst beispielsweise eine Betriebsspannung und/oder eine Betriebstemperatur und/oder eine Taktfrequenz. Vorzugsweise ist die mindestens eine Schutzeinrichtung SE ausgebildet zu überprüfen, ob der mindestens eine Betriebsparameter einen vorgegebenen unteren Schwellenwert unterschreitet oder einen vorgegebenen oberen Schwellenwert überschreitet, das heißt einen durch den unteren und den oberen Schwellenwert vorgegebenen Wertebereich des mindestens einen Betriebsparameters verlässt.

Bei hohen Sicherheitsanforderungen umfasst die mindestens eine Schutzeinrichtung SE vorzugsweise auch ein Schutzgitter oder ähnliches, das beispielsweise als oberste Metallisierungsebene auf einem Chip des sicheren Speichers SMEM und/oder der mindestens einen Recheneinheit CPU, insbesondere der kryptographischen Funktionseinheit oder der sicheren Recheneinheit SCPU, ausgebildet ist. Dies ist in Figur 2A für den sicheren Speicher SMEM durch einen gestrichelt gezeichneten Rahmen um diese Komponente angedeutet. Die mindestens eine Schutzeinrichtung SE ist ausgebildet, eine Beschädigung des Schutzgitters zu erkennen. Dadurch ist eine Verletzung der mechanischen Unversehrtheit des sicheren Speicher SMEM beziehungsweise der kryptographischen Funktionseinheit beziehungsweise der sicheren Recheneinheit SCPU erkennbar. Die mindestens eine Schutzeinrichtung SE kann jedoch auch anders ausgebildet sein und insbesondere an die jeweiligen Sicherheitsanforderungen angepasst sein.

Die mindestens eine Schutzeinrichtung SE umfasst vorzugsweise auch eine Gehäuseschutzeinrichtung GSE, beispielsweise in Form mindestens eines Gehäuseschalters. Die Gehäuseschutzeinrichtung GSE wird ausgelöst durch Öffnen des Gehäuses des Tachographen DTCO. Der Tachograph DTCO ist vorzugsweise ausgebildet, zum Schutz vor unbefugten Manipulationen seinen Betrieb einzuschränken oder einzustellen und gegebenenfalls sicherheitsrelevante Daten zu löschen, zum Beispiel die in dem sicheren Speicher SMEM gespeicherten kryptographischen Schlüssel. Die Gehäuseschutzeinrichtung GSE kann auch durch eine Verplombung und/oder eine Versiegelung des Gehäuses gebildet sein oder eine solche umfassen, so dass ein Öffnen des Gehäuses erkennbar ist.

Der Datenspeicher DMEM ist vorzugsweise unsicher ausgebildet, also insbesondere nicht elektrisch und/oder mechanisch vor Manipulation geschützt. Aufgrund des im Allgemeinen höheren Preises des sicheren Speichers SMEM gegenüber dem Datenspeicher DMEM weist der sichere Speicher SMEM gegebenenfalls nur eine geringe Speicherkapazität auf im Vergleich zu dem Datenspeicher DMEM. In dem Datenspeicher DMEM gespeicherte Daten sind beispielsweise mittels digitaler Signatur vor unbefugter Manipulation schützbar.

Der Tachograph DTCO umfasst ferner mindestens eine Datenschnittstelle DS. Mittels der mindestens einen Datenschnittstelle DS ist der Tachograph DTCO mit dem mindestens einen Fahrzeugdatenbus FDB koppelbar. Bevorzugt umfasst der Tachograph DTCO zwei Datenschnittstellen DS. Eine dieser beiden Datenschnittstellen DS ist vorgesehen für das Koppeln mit einem der gegebenenfalls mehreren Fahrzeugdatenbusse FDB, der unter der Hoheit des Fahrzeugherstellers steht. Der andere der beiden Datenschnittstellen DS ist vorgesehen für das Koppeln mit einem der gegebenenfalls mehreren Fahrzeugdatenbusse FDB, der nicht unter der Hoheit des Fahrzeugherstellers steht, und ist insbesondere vorgesehen zum Koppeln mit demjenigen Fahrzeugdatenbus FDB, mit dem die Maut-On-Board-Unit OBU gekoppelt ist.

Figur 2B zeigt die Maut-On-Board-Unit OBU, die ebenfalls die mindestens eine Recheneinheit CPU, den sicheren Speicher SMEM und die mindestens eine Datenschnittstelle DS umfasst, die jeweils im Wesentlichen den entsprechenden Komponenten des Tachographen DTCO entsprechen. Ferner kann entsprechend auch der Datenspeicher DMEM vorgesehen sein. Die Maut-On-Board-Unit OBU weist vorzugsweise auch Schutzeinrichtungen SE entsprechend denen des Tachographen DTCO auf. Die Maut-On-Board-Unit OBU ist ausgebildet, die für das Ermitteln von zu zahlenden Straßenbenutzungsgebühren erforderlichen Größen zu erfassen oder zu ermitteln und gegebenenfalls zu speichern.

Die Maut-On-Board-Unit OBU kann auch eine Positionsermittlungseinheit POS umfassen zum Ermitteln einer aktuellen Position des Kraftfahrzeugs. Die Positionsermittlungseinheit POS ist dazu beispielsweise ausgebildet, Daten eines satellitengestützten Positionsermittlungssystems, zum Beispiel eines "Global Positioning System", oder kurz: GPS, zu empfangen und auszuwerten. Alternativ oder zusätzlich kann die Positionsermittlungseinheit POS beispielsweise auch einen Inertialsensor umfassen, insbesondere einen Gyro-Sensor. Die Positionsermittlungseinheit POS ist teilweise oder vollständig verzichtbar, wenn die Maut-On-Board-Unit OBU die erforderlichen Informationen über den vertrauenswürdigen Kommunikationskanal über den Fahrzeugdatenbus FDB von dem Tachographen DTCO übermittelt bekommt. Es kann jedoch ebenso vorgesehen sein, durch Redundanz der Daten, die durch den Tachographen DTCO erfasst oder ermittelt werden, und der Daten, die durch die Maut-On-Board-Unit OBU und insbesondere durch ihre Positionsermittlungseinheit POS erfasst oder ermittelt werden, die Präzision oder Zuverlässigkeit der Maut-On-Board-Unit OBU und/oder des Tachographen DTCO zu erhöhen. Beispielsweise kann vorgesehen sein, durch die Positionsermittlungseinheit POS ermittelte Daten, vorzugsweise über den virtuellen vertrauenswürdigen Kommunikationskanal, über den Fahrzeugdatenbus FDB an den Tachographen DTCO zu übermitteln. Der Tachograph DTCO kann ausgebildet sein, diese Daten auszuwerten und/oder zu speichern. Diskrepanzen zwischen den erfassten oder ermittelten Daten des Tachographen DTCO und der Maut-On-Board-Unit OBU können so einfach erkannt werden und die Sicherheit und Zuverlässigkeit des Systems kann dadurch erhöht werden.

Figur 2C zeigt das Anzeigeinstrument INST, das ebenfalls die mindestens eine Recheneinheit CPU, den sicheren Speicher SMEM und die mindestens eine Datenschnittstelle DS umfasst, die jeweils im Wesentlichen den entsprechenden Komponenten des Tachographen DTCO oder der Maut-On-Board-Unit OBU entsprechen. Das Anzeigeinstrument INST kann auch Schutzeinrichtungen SE entsprechend denen des Tachographen DTCO oder der Maut-On-Board-Unit OBU umfassen. Jedoch sind im Allgemeinen die Sicherheitsanforderungen für das Anzeigeinstrument INST geringer als für den Tachographen DTCO oder die Maut-On-Board-Unit OBU. Ferner kann entsprechend auch der Datenspeicher DMEM vorgesehen sein, beispielsweise zum Zwischenspeichern von anzuzeigenden Daten.

Das Anzeigeinstrument INST umfasst ferner mindestens eine Anzeigeeinheit ANZ zum Anzeigen von Informationen, die dem Anzeigeinstrument INST von dem Tachographen DTCO und/oder der Maut-On-Board-Unit OBU und/oder von anderen Geräteeinheiten, die mit demselben Fahrzeugdatenbus FDB gekoppelt sind, über den Fahrzeugdatenbus FDB und insbesondere über den vertrauenswürdigen Kanal übermittelt werden.

Das Anzeigeinstrument INST kann auch mindestens eine Eingabeeinheit umfassen zum Eingeben und/oder Auswählen von Daten. Beispielsweise sind Schalter und/oder Knöpfe und/oder Tasten und/oder andere Eingabemittel für eine manuelle Eingabe oder manuelle Auswahl vorgesehen. Vorzugsweise ist das Anzeigeinstrument INST dann ausgebildet, die getätigten Eingaben oder Auswahlen über den vertrauenswürdigen Kanal über den Fahrzeugdatenbus FDB an die jeweils vorgesehene Geräteeinheit zu übermitteln, zum Beispiel an den Tachographen DTCO oder die Maut-On-Board-Unit OBU. Die jeweilige Geräteeinheit muss dann gegebenenfalls keine eigene Eingabeeinheit umfassen und kann daher preisgünstiger und kleiner ausgebildet werden. Ferner muss die jeweilige Geräteeinheit dann auch nicht gut erreichbar in dem Fahrzeug angeordnet sein. Durch die Möglichkeit der sicheren Datenspeicherung in dem sicheren Speicher SMEM und/oder der vertrauenswürdigen und/oder vertraulichen Datenübermittlung an andere Geräteeinheiten ist das Anzeigeinstrument INST mit der Eingabeeinheit beispielsweise auch geeignet zum Erfassen von Zugangs- oder Freischaltkodes oder ähnlichem, zum Beispiel in Form von Geheimzahlen oder persönlichen Identifikationsnummern, oder kurz: PIN, und zum manipulationssicheren Übermitteln von diesen an mindestens eine der Geräteeinheiten.

Auch die Identifikationseinheit PID und/oder die Zugangskontrolleinheit KE und/oder die Verkehrstelematikeinheit VT und/oder die Motor-Steuereinheit MST und/oder die Komforteinrichtungssteuereinheit KST und/oder die Diagnoseschnittstelleneinheit DIAG weisen vorzugsweise ebenfalls die mindestens eine Recheneinheit CPU, den sicheren Speicher SMEM und die mindestens eine Datenschnittstelle DS auf, die jeweils im Wesentlichen den entsprechenden Komponenten des Tachographen DTCO, der Maut-On-Board-Unit OBU oder des Anzeigeinstruments INST entsprechen. Ferner sind diese genannten Geräteeinheiten bevorzugt auch dazu ausgebildet, Daten über den virtuellen vertrauenswürdigen Kanal zu senden und/oder zu empfangen und die empfangenen Daten auf eine unbefugte Manipulation, das heißt Verfälschung, zu überprüfen. Die Datenkommunikation zwischen den Geräteeinheiten kann so besonders sicher und zuverlässig erfolgen und die übertragenen Daten sind so besonders vertrauenswürdig.

Der Schutz vor unbefugter Manipulation der übertragenen Daten, insbesondere von Nutzdaten DAT, und somit auch der virtuelle vertrauenswürdige Kanal beruhen auf einem kryptographischen Prüfwert PW, der jeweils abhängig von den Nutzdaten DAT ermittelt und zusätzlich zu den Nutzdaten DAT übertragen wird. Der kryptographische Prüfwert PW wird von der jeweiligen Geräteeinheit beispielsweise als eine digitale Signatur oder als ein Nachrichtenauthentisierungskode ermittelt, der auch als "Message Authentication Code", oder kurz: MAC, bezeichnet werden kann. Der kryptographische Prüfwert PW wird insbesondere als ein gekürzter Nachrichtenauthentisierungskode RMAC ermittelt, der auch als "truncated MAC" oder "Retail-MAC" bezeichnet werden kann. Der Nachrichtenauthentisierungskode und entsprechend der gekürzte Nachrichtenauthentisierungskode RMAC werden bevorzugt abhängig von dem mindestens einen in dem sicheren Speicher SMEM gespeicherten kryptographischen Schlüssel ermittelt, insbesondere dem für symmetrische Verschlüsselungsverfahren vorgesehenen kryptographischen Schlüssel, vorzugsweise durch Nutzung eines "Cipher Block Chaining Mode", oder kurz: CBC, und eines Algorithmus gemäß "Data Encryption Standard", oder kurz: DES, oder "Advanced Encryption Standard", oder kurz: AES. Der kryptographische Prüfwert PW und insbesondere der Nachrichtenauthentisierungskode beziehungsweise der gekürzte Nachrichtenauthentisierungskode RMAC können jedoch auch anders gebildet werden.

Der Nachrichtenauthentisierungskode weist beispielsweise eine Länge von acht Bytes auf. Der gekürzte Nachrichtenauthentisierungskode RMAC besteht bevorzugt aus einem Teil des Nachrichtenauthentisierungskodes, der beispielsweise vier Bytes oder zwei Bytes umfasst. Der gekürzte Nachrichtenauthentisierungskode RMAC kann jedoch auch eine andere Länge aufweisen und/oder anders gebildet sein, jedoch weist der gekürzte Nachrichtenauthentisierungskode RMAC eine geringere Länge auf als der ungekürzte Nachrichtenauthentisierungskode.

Der jeweilige Empfänger der Daten kann die Nutzdaten DAT abhängig von dem empfangenen und den Nutzdaten DAT zugehörigen kryptographischen Prüfwert PW und einem geeigneten kryptographischen Schlüssel auf Verfälschungen überprüfen. Der geeignete kryptographische Schlüssel ist derjenige kryptographische Schlüssel, den der Absender der Daten für das Ermitteln des kryptographischen Prüfwerts PW abhängig von den Nutzdaten DAT genutzt hat, wenn der kryptographische Prüfwert PW gemäß einem symmetrischen Verfahren ermittelt wurde, also beispielsweise als der Nachrichtenauthentisierungskode oder der gekürzte Nachrichtenauthentisierungskode RMAC. Der Empfänger der Daten muss dazu über den gleichen kryptographischen Schlüssel verfügen wie der Absender der Daten. Der geeignete kryptographische Schlüssel kann jedoch auch ein dem privaten Schlüssel des Absenders der Daten zugehöriger öffentlicher Schlüssel sein, wenn der kryptographische Prüfwert PW gemäß einem asymmetrischen Verfahren ermittelt wurde, beispielsweise als die digitale Signatur. Der Empfänger der Daten muss dann nur den öffentlichen Schlüssel des Absenders der Daten kennen, nicht jedoch dessen privaten Schlüssel. Das asymmetrische Verfahren ermöglicht eine besonders hohe Sicherheit, erfordert jedoch im Allgemeinen einen höheren Rechenaufwand als das symmetrische Verfahren. Bevorzugt wird daher das symmetrische Verfahren für das Ermitteln des kryptographischen Prüfwerts PW genutzt.

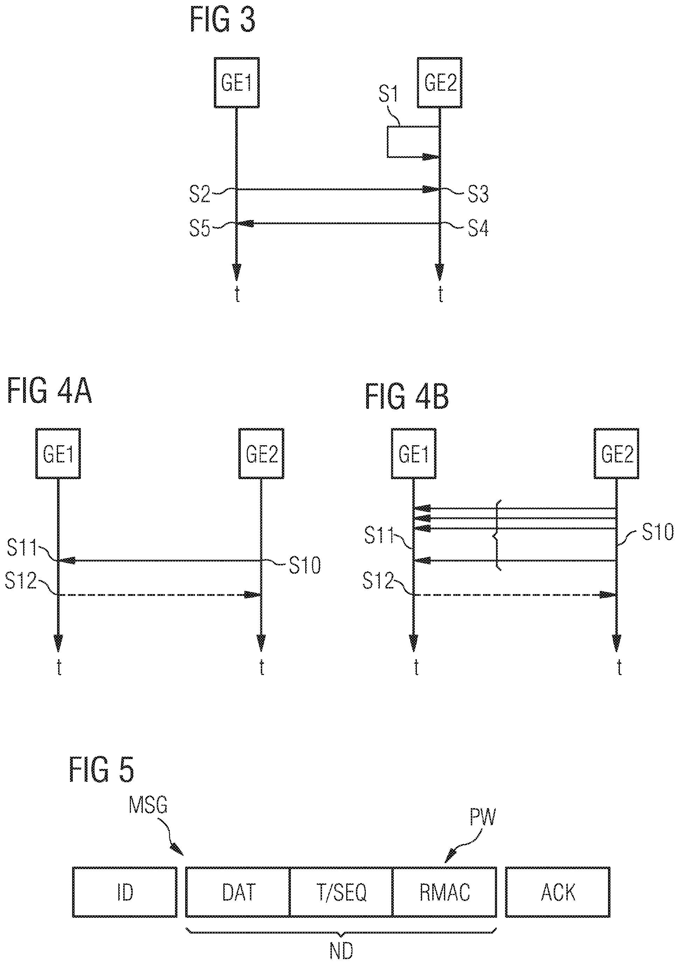

Figur 3 zeigt einen Authentisierungsvorgang, der vorzugsweise abhängig von mindestens einem vorgegebenen Ereignis durchgeführt wird. Ein solches vorgegebenes Ereignis ist beispielsweise ein Betriebsbeginn, eine Initialisierung des Systems oder mindestens eines der Kommunikationspartner, ein Ablauf eines vorgegebenen Zeitintervalls, zum Beispiel eines Tages oder eines Eichintervalls, ein Abschluss eines Eingriffs in das System oder in mindestens einen der Kommunikationspartner, zum Beispiel wegen Wartungsarbeiten oder Reparatur oder Austausch mindestens eines der Kommunikationspartner, oder ein Aktivieren der Zündung, zum Beispiel durch Drehen des Zündschlüssels. Bevorzugt wird bei dem Authentisierungsvorgang mindestens ein kryptographischer Schlüssel für das Ermitteln des kryptographischen Prüfwerts PW und für das Überprüfen von Nutzdaten DAT abhängig von dem kryptographischen Prüfwert PW übertragen.

Als Geräteeinheiten und Kommunikationspartner sind eine erste Geräteeinheit GE1 und eine zweite Geräteeinheit GE2 vorgesehen. Beispielsweise ist die erste Geräteeinheit GE1 durch die Maut-On-Board-Unit OBU gebildet und ist die zweite Geräteeinheit GE2 durch den Tachographen DTCO gebildet. Die erste Geräteeinheit GE1 kann jedoch ebenso durch das Anzeigeinstrument INST und die zweite Geräteeinheit GE2 durch die Maut-On-Board-Unit OBU oder den Tachographen DTCO gebildet sein. Ferner können diese Zuordnungen auch umgekehrt ausgebildet sein. Die erste Geräteeinheit GE1 und/oder die zweite Geräteeinheit GE2 können jedoch jeweils auch durch eine andere mit demselben Fahrzeugdatenbus FDB gekoppelte Geräteeinheit gebildet sein.

Bevorzugt verfügen die erste und die zweite Geräteeinheit GE1, GE2 bereits über den jeweiligen öffentlichen Schlüssel des jeweiligen Kommunikationspartners. Ist dies nicht der Fall, müssen die erste und die zweite Geräteeinheit GE1, GE2 ihren jeweiligen öffentlichen Schlüssel an den jeweiligen Kommunikationspartner übertragen.

In einem Schritt S1 führt die zweite Geräteeinheit GE2 eine Überprüfung ihrer internen Zustände und der gegebenenfalls angeschlossenen Sensoren SENS durch. Der Schritt S1 wird bevorzugt zu Betriebsbeginn ausgeführt. In einem Schritt S2 sendet die erste Geräteeinheit GE1 eine Authentisierungsanfrage an die zweite Geräteeinheit GE2. Die erste Geräteeinheit GE1 sendet die Authentisierungsanfrage vorzugsweise verschlüsselt abhängig von dem öffentlichen Schlüssel der zweiten Geräteeinheit GE2 an diese, so dass nur die zweite Geräteeinheit GE2 die Authentisierungsanfrage mit ihrem privaten Schlüssel entschlüsseln kann. Die Authentisierungsanfrage umfasst vorzugsweise Identifikationsinformationen der ersten Geräteeinheit GE1 und/oder eine Uhrzeit und/oder ein Tagesdatum und/oder einen Sequenzwert. In einem Schritt S3 empfängt die zweite Geräteeinheit GE2 die Authentisierungsanfrage und entschlüsselt diese abhängig von ihrem privaten Schlüssel.
In einem Schritt S4 sendet die zweite Geräteeinheit GE2 eine Authentisierungsantwort an die erste Geräteeinheit GE1. Die zweite Geräteeinheit GE2 sendet die Authentisierungsantwort vorzugsweise verschlüsselt abhängig von dem öffentlichen Schlüssel der ersten Geräteeinheit GE1 an diese, so dass nur die erste Geräteeinheit GE1 die Authentisierungsantwort mit ihrem privaten Schlüssel entschlüsseln kann. Die Authentisierungsantwort umfasst vorzugsweise ein Zertifikat, das den kryptographischen Schlüssel für das symmetrische Verfahren und Identifikationsinformationen der zweiten Geräteeinheit GE2 umfasst. Ferner umfasst die Authentisierungsantwort vorzugsweise auch einen Sequenzwert und/oder eine Uhrzeit und/oder ein Tagesdatum und/oder einen Zufallswert, um ein unbefugtes Ersetzen oder Unterdrücken der Authentisierungsantwort zu erschweren. In einem Schritt S5 empfängt die erste Geräteeinheit GE1 die Authentisierungsantwort und entschlüsselt diese abhängig von ihrem privaten Schlüssel. Die erste Geräteeinheit GE1 speichert den empfangenen kryptographischen Schlüssel in ihrem sicheren Speicher SMEM.

Es kann vorgesehen sein, dass sich die jeweiligen Kommunikationspartner, die sich Nachrichten MSG entsprechend dem virtuellen vertrauenswürdigen Kanal übermitteln, gegenseitig authentisieren, vorzugsweise indem einer der Kommunikationspartner die Authentisierungsanfrage an seinen jeweiligen Kommunikatonspartner richtet. Eine solche dezentrale Authentisierung der Geräteeinheiten ermöglicht eine hohe Flexibilität. Es kann jedoch ebenso eine zentrale Authentisierungsstelle vorgesehen sein, die bevorzugt durch den Tachographen DTCO gebildet ist. Die Geräteeinheiten sind dann ausgebildet, sich vorzugsweise entsprechend dem in Figur 3 gezeigten Authentisierungsvorgang gegenüber dieser zentralen Authentisierungsstelle zu authentisieren. Die zentrale Authentisierungsstelle ist ausgebildet zum Erzeugen des jeweiligen mindestens einen kryptographischen Schlüssels und zum Kontrollieren und/oder Steuern der Datenkommunikation zwischen den Geräteeinheiten bezüglich des virtuellen vertrauenswürdigen Kanals. Stellt die zentrale Authentisierungsstelle beispielsweise die Vertrauenswürdigkeit einer der Geräteeinheiten fest, können andere Geräteeinheiten den Nutzdaten DAT vertrauen, die diese von der als vertrauenswürdig eingestuften Geräteeinheit zusammen mit dem zugehörigen kryptographischen Prüfwert PW empfangen, wenn die Überprüfung der Nutzdaten DAT abhängig von dem empfangenen Prüfwert PW keinen Hinweis auf Verfälschung ergibt. Entsprechend kann die zentrale Authentisierungsstelle auch feststellen, dass eine der Geräteeinheiten nicht vertrauenswürdig ist. Andere Geräteeinheiten können den Nutzdaten DAT dieser nicht vertrauenswürdigen Geräteeinheit auch dann nicht vertrauen, wenn die Überprüfung der Nutzdaten DAT abhängig von dem empfangenen Prüfwert PW keinen Hinweis auf Verfälschung ergibt. Die Geräteeinheiten können beispielsweise durch eine entsprechende Anfrage an die zentrale Authentisierungsstelle abfragen, ob diejenige Geräteeinheit vertrauenswürdig ist, von der sie Nutzdaten DAT empfangen und verwerten möchten. Diese Anfrage an die zentrale Authentisierungsstelle und deren Antwort erfolgen bevorzugt ebenfalls über den virtuellen vertrauenswürdigen Kanal.

Figur 4A zeigt ein Ablaufdiagramm einer ersten Ausführungsform eines gesicherten Datenübertragungsvorgangs zwischen der zweiten und der ersten Geräteeinheit GE2, GE1, das heißt eines Datenübertragungsvorgangs über den virtuellen vertrauenswürdigen Kanal. In einem Schritt S10 bildet die zweite Geräteeinheit GE2 die zu übertragende Nachricht MSG, die die Nutzdaten DAT und den kryptographischen Prüfwert PW umfasst. Eine solche Nachricht MSG ist beispielhaft in Figur 5 dargestellt. Die Nutzdaten DAT und der kryptographische Prüfwert PW, bevorzugt in Form des gekürzten Nachrichtenauthentisierungskodes RMAC, sind gemeinsam in der Nachricht MSG enthalten. Für das Übertragen des kryptographischen Prüfwerts PW ist dadurch keine zusätzliche Nachricht MSG erforderlich, so dass die Auslastung des Fahrzeugdatenbusses FDB durch Vorsehen des kryptographischen Prüfwerts PW nicht erhöht wird.

Bevorzugt ist als Schutz vor einem unbefugten Ersetzen von Nachrichten MSG eine zusätzliche Information in jeder Nachricht MSG vorgesehen, beispielsweise der aktuelle Zeitstempel T oder eine Sequenznummer SEQ. Der kryptographische Prüfwert PW ist vorzugsweise abhängig von den Nutzdaten DAT und von dem Zeitstempel T beziehungsweise der Sequenznummer SEQ gebildet. Der kryptographische Prüfwert PW kann jedoch ebenso nur abhängig von den Nutzdaten DAT gebildet sein.

Die Nutzdaten DAT, der Zeitstempel T beziehungsweise die Sequenznummer SEQ und der kryptographische Prüfwert PW bilden einen Nutzdatenteil ND der Nachricht MSG, der beispielsweise eine Länge von acht Bytes aufweist. Beispielsweise sind für die Nutzdaten DAT vier Bytes vorgesehen, zum Beispiel für die aktuelle Geschwindigkeit, die zurückgelegte Wegstrecke oder den aktuellen Kilometerstand oder die aktuelle Uhrzeit. Für den Zeitstempel T beziehungsweise die Sequenznummer SEQ und für den kryptographischen Prüfwert PW sind beispielsweise jeweils zwei Bytes vorgesehen. Eine solche Nachricht MSG ist über den beispielsweise als CAN ausgebildeten Fahrzeugdatenbus FDB übertragbar. Die Nachricht MSG umfasst vorzugsweise auch einen Identifikationsteil ID und einen Bestätigungsteil ACK. Die Nachricht MSG kann jedoch auch einen anderen Aufbau aufweisen.

Die erste Geräteeinheit GE1 empfängt in einem Schritt S11 die Nachricht MSG und überprüft die Nutzdaten DAT und gegebenenfalls den Zeitstempel T beziehungsweise die Sequenznummer SEQ abhängig von dem kryptographischen Prüfwert PW und dem bereits in dem sicheren Speicher SMEM gespeicherten mindestens einen kryptographischen Schlüssel. Das Überprüfen umfasst beispielsweise ein erneutes Ermitteln des kryptographischen Prüfwerts PW abhängig von den Nutzdaten DAT und gegebenenfalls von dem Zeitstempel T beziehungsweise der Sequenznummer SEQ und abhängig von dem mindestens einen kryptographischen Schlüssel und ein Vergleichen des erneut ermittelten kryptographischen Prüfwerts PW mit dem empfangenen kryptographischen Prüfwert PW. Stimmen diese nicht überein, wurde die Nachricht durch unbefugte Manipulation oder durch fehlerhafte Übertragung verfälscht und die enthaltenen Nutzdaten DAT sind nicht vertrauenswürdig. Stimmen die kryptographischen Prüfwerte PW jedoch überein, so sind die Nutzdaten DAT vertrauenswürdig. Es kann vorgesehen sein, dass die erste Geräteeinheit GE1 den Empfang der Nachricht MSG in einem Schritt S12 bestätigt.

Figur 4B zeigt eine alternativ vorgesehene aber nicht beanspruchte zweite Ausführungsform des gesicherten Datenübertragungsvorgangs. Diese entspricht in seinem grundsätzlichen Ablauf dem der ersten Ausführungsform. Jedoch werden die Nutzdaten DAT und der zugehörige kryptographische Prüfwert PW in jeweils mindestens einer separaten Nachricht MSG von der zweiten Geräteeinheit GE2 über den Fahrzeugdatenbus FDB zu der ersten Geräteeinheit GE1 gesandt. Dies ist insbesondere dann vorteilhaft, wenn die Nutzdaten DAT und der kryptographische Prüfwert PW zu lang sind, um gemeinsam in der einen Nachricht MSG übertragen zu werden. Ferner ist vorteilhaft, dass ein gegebenenfalls bereits vorgegebener Nachrichteninhalt und/oder -aufbau beibehalten werden kann und für das gesicherte Übertragen der Nutzdaten DAT lediglich mindestens eine zusätzliche Nachricht MSG übertragen werden muss, die den kryptographischen Prüfwert PW umfasst. Das Senden der mindestens einen Nachricht MSG, die den kryptographischen Prüfwert PW umfasst, erfolgt bevorzugt innerhalb einer vorgegebenen Zeitdauer nach dem Senden der mindestens einen Nachricht MSG, die die zugehörigen Nutzdaten DAT umfasst.

Entsprechend der gesicherten Datenübertragung zwischen beispielsweise dem Tachographen DTCO und der Maut-On-Board-Unit OBU über den mindestens einen Fahrzeugdatenbus FDB wird bevorzugt auch eine gesicherte Datenübertragung zwischen mindestens einer der Geräteeinheiten des Kraftfahrzeugs und mindestens einer externen Einheit EE durchgeführt. Die mindestens eine externe Einheit EE ist zum Beispiel durch die externe Geräteeinheit GE oder den externen Sender/Empfänger oder die Funkbake FB gebildet.

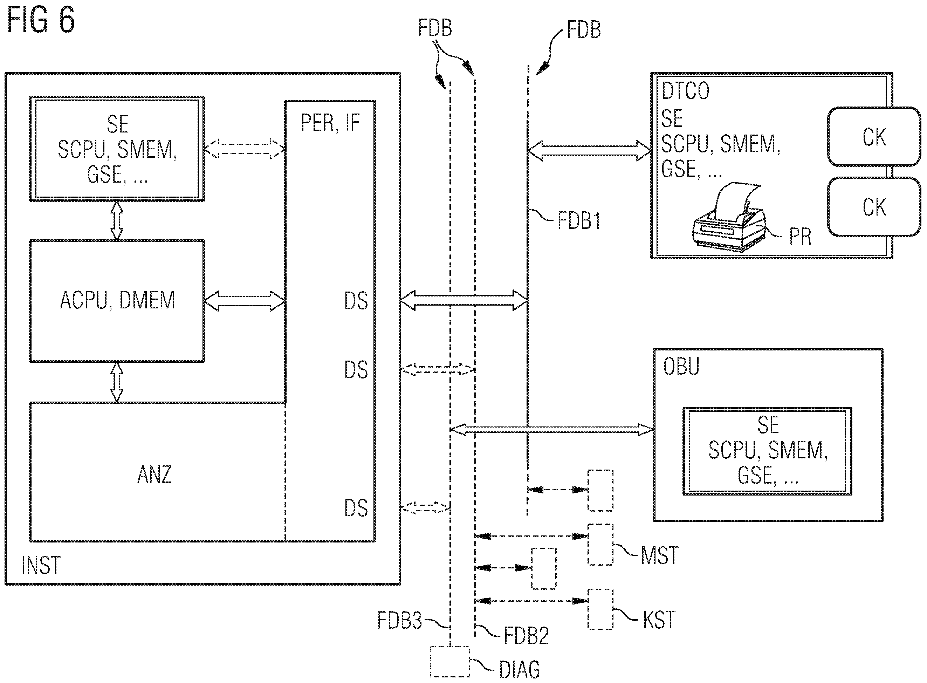

Figur 6 zeigt eine weitere Ausführungsform des Systems. Das Anzeigeinstrument INST umfasst die Applikationsrecheneinheit ACPU, den Datenspeicher DMEM, die Anzeige ANZ und die mindestens eine Sicherheitseinrichtung SE. Die mindestens eine Sicherheitseinrichtung SE umfasst insbesondere vorzugsweise die sichere Recheneinheit SCPU, den sicheren Speicher SMEM und die Gehäuseschutzeinrichtung GSE. Das Anzeigeinstrument INST umfasst ferner Peripherie PER und Schnittstellen IF. Die Schnittstellen IF umfassen insbesondere die mindestens eine Datenschnittstelle DS. Die Gehäuseschutzeinrichtung GSE ist vorzugsweise so ausgebildet, dass sie sich auch auf die Schnittstellen IF und die Peripherie PER erstreckt, beispielsweise dadurch, dass die Schnittstellen IF und die Peripherie PER so innerhalb des durch die Gehäuseschutzeinrichtung GSE geschützten Gehäuses angeordnet sind, dass diese zwar wie vorgesehen benutzt, nicht jedoch unerkannt manipuliert werden können. Dadurch umfasst das Anzeigeinstrument INST eine abgestufte Sicherheit. Auf einer ersten Stufe besteht Schutz durch das Gehäuse und die Gehäuseschutzeinrichtung GSE und auf einer zweiten Stufe besteht Schutz durch beispielsweise das Schutzgitter oder die Schutzschicht des sicheren Speichers SMEM und/oder der sicheren Recheneinheit SCPU.

Das Anzeigeinstrument INST umfasst vorzugsweise mindestens zwei Datenschnittstellen DS. In der in Figur 6 gezeigten Ausführungsform weist das Anzeigeinstrument INST drei Datenschnittstellen DS auf. Die Datenschnittstellen DS sind bevorzugt jeweils als die Fahrzeugdatenbusschnittstelle ausgebildet. Es können auch Fahrzeugdatenbusschnittstellen unterschiedlichen Typs vorgesehen sein oder es kann vorgesehen sein, mindestens eine der Datenbusschnittstellen DS für eine andere Datenbusart vorzusehen, beispielsweise als "Universal Serial Bus", oder kurz: USB, insbesondere für ein Koppeln mit dem externen Gerät EG. Es können auch andere oder weitere Schnittstellen IF vorgesehen sein.

Die Anzeige ANZ bildet einen Teil der Peripherie PER. Ferner kann, wie zuvor bereits beschrieben, auch eine Eingabeeinheit vorgesehen sein, die dann ebenfalls einen Teil der Peripherie PER bildet. Die Peripherie PER kann jedoch auch weitere Einheiten umfassen.

In dem sicheren Speicher SMEM des Anzeigeinstruments INST sind insbesondere sicher speicherbar der mindestens eine kryptographische Schlüssel und/oder der aktuelle Kilometerstand und/oder Identifikationsinformationen des Fahrers und/oder Unternehmens und/oder Fahrzeugs und/oder des Anzeigeinstruments INST und/oder anderer Geräteeinheiten und/oder Einstellungsparameter von Komponenten des Fahrzeugs, zum Beispiel von Geräteeinheiten wie der Komforteinrichtungssteuereinheit KST oder der Motor-Steuereinheit MST, und/oder von Diagnosedaten des Fahrzeugs, zum Beispiel von Abgasdaten. Insbesondere das manipulationssichere Speichern des aktuellen Kilometerstands ist von großer Bedeutung und durch das Anzeigeinstrument INST zuverlässig durchführbar. Durch Vorsehen der mindestens einen Sicherheitseinrichtung SE können solche Daten und Informationen durch das Anzeigeinstrument INST zudem von anderen Geräteeinheiten oder dem externen Gerät EG über den virtuellen vertrauenswürdigen Kanal empfangen und auf Verfälschungen überprüft werden und/oder gesichert durch den jeweiligen Prüfwert PW über den virtuellen vertrauenswürdigen Kanal an andere Geräteeinheiten oder das externe Gerät EG gesendet oder weitergeleitet werden.

In der in Figur 6 gezeigten Ausführungsform des Systems sind drei Fahrzeugdatenbusse FDB oder ein dreiteiliger Fahrzeugdatenbus FDB vorgesehen. Der Tachograph DTCO ist mit einem ersten Fahrzeugdatenbus FDB1 oder ersten Teil des Fahrzeugdatenbusses FDB gekoppelt. Geräteeinheiten, insbesondere Steuergeräte des Kraftfahrzeugs, zum Beispiel die Motor-Steuereinheit MST und/oder die Komforteinrichtungssteuereinheit KST, sind in der gezeigten Ausführungsform mit einem zweiten Fahrzeugdatenbus FDB2 oder zweiten Teil des Fahrzeugdatenbusses FDB gekoppelt. Ein dritter Fahrzeugdatenbus FDB3 oder dritter Teil des Fahrzeugdatenbusses FDB ist vorgesehen für ein Koppeln mit externen Geräten EG, zum Beispiel über die Diagnoseschnittstelleneinheit DIAG, oder mit der Maut-On-Board-Unit OBU. Der Tachograph DTCO und die Maut-On-Board-Unit OBU sind, wie zuvor bereits beschrieben, ebenfalls mit der mindestens einen Sicherheitseinrichtung SE ausgestattet. Der Tachograph DTCO umfasst bevorzugt auch einen Drucker PR.

Bevorzugt bildet das Anzeigeinstrument INST die Verbindungseinheit VE oder umfasst das Anzeigeinstrument INST die Verbindungseinheit VE. Das Anzeigeinstrument INST weist dadurch Gateway-Funktionalität auf. Das Anzeigeinstrument INST kann somit Daten, die diesem an einer der Datenschnittstellen DS zugeführt werden, an mindestens eine andere der Datenschnittstellen DS weiterleiten. Aufgrund der mindestens einen Sicherheitseinrichtung SE des Anzeigeinstruments INST kann das Anzeigeinstrument INST die empfangenen und gegebenenfalls weiterzuleitenden Daten sehr einfach überprüfen, zum Beispiel anhand des jeweils beigefügten Prüfwerts PW, und/oder Filtern und/oder authentisieren, insbesondere abhängig von dem in dem sicheren Speicher SMEM gespeicherten mindestens einen kryptographischen Schlüssel. Dadurch kann das Anzeigeinstrument INST beispielsweise auch als eine Sicherheitsbarriere zwischen den Fahrzeugdatenbussen FDB oder Teilen des Fahrzeugdatenbusses FDB dienen. Ferner kann das Anzeigeinstrument INST auch dazu ausgebildet sein, die mit diesem gekoppelten Geräteeinheiten zu authentisieren, das heißt diese Geräteeinheiten insbesondere für die Datenkommunikation und insbesondere für die gesicherte Datenkommunikation über den virtuellen vertrauenswürdigen Kanal zuzulassen oder zu sperren. Dies gilt insbesondere auch für externe Geräte EG. Dadurch kann das System zuverlässig gegen möglicherweise unbefugte Eingriffe von außen, beispielsweise über das externe Gerät EG, geschützt werden, wenn das Authentisieren des externen Geräts EG fehlschlägt.

Aufgrund der Sicherheitsfunktionalität des Anzeigeinstruments INST durch Vorsehen der mindestens einen Sicherheitseinrichtung SE kann das Anzeigeinstrument INST auch weitere, insbesondere sicherheitsrelevante Funktionen aufweisen. Beispielsweise kann vorgesehen sein, dass das Anzeigeinstrument INST auch die Diagnoseschnittstelleneinheit DIAG und/oder die Identifikationseinheit PID und/oder die Zugangskontrolleinheit KE und/oder die Komforteinrichtungssteuereinheit KST bildet oder umfasst oder mindestens einen Teil von diesen, insbesondere einen sicherheitsrelevanten Teil, umfasst. Beispielsweise sind eine Mechanik und/oder Sensorik eines Türschlosssystems und/oder einer Wegfahrsperreinheit in üblicher Anordnung vorgesehen. Die jeweils zugehörige und üblicherweise zusätzlich vorgesehene Geräteeinheit, die die sicherheitsrelevante Verarbeitung von erfassten Sensorwerten durchführt und das Öffnen der Fahrzeugtür oder den Start des Fahrzeugs gewährt oder verweigert, also insbesondere die Identifikationseinheit PID und/oder die Zugangskontrolleinheit KE, können durch das Anzeigeinstrument INST ersetzt werden, indem die mindestens eine Sicherheitseinrichtung SE genutzt wird für die sicherheitsrelevante Verarbeitung. Dies ist besonders vorteilhaft bei schlüssellosen Identifikations- oder Zugangssystemen und/oder Identifikations- oder Zugangssystemen mit draht- und berührungsloser Verbindung zu einem Schlüssel, der beispielsweise auch durch eine Chipkarte CK gebildet sein kann. Entsprechend kann das Anzeigeinstrument INST auch zum Beispiel die Diagnoseschnittstelleneinheit DIAG und/oder die Komforteinrichtungssteuereinheit KST und/oder andere Geräteeinheiten vollständig oder teilweise ersetzen. Durch das Einsparen der zusätzlichen Geräteeinheiten kann das System besonders kostengünstig sein.

Das Vorsehen der mindestens einen Sicherheitseinrichtung SE in dem Anzeigeinstrument INST ermöglicht ferner ein Überprüfen und/oder Authentisieren von Software, insbesondere von Software-Aktualisierungen, die für das Anzeigeinstrument INST selbst oder für eine der anderen mit diesem gekoppelten Geräteeinheiten vorgesehen sind und die beispielsweise über die Diagnoseschnittstelleneinheit DIAG von außen, zum Beispiel von dem externen Gerät EG, einspielbar sind. Die Software ist insbesondere eine ausführbare Software, die in der jeweils vorgesehenen Geräteeinheit des Kraftfahrzeugs ausführbar ist. Durch das Überprüfen und/oder Authentisieren der Software durch das Anzeigeinstrument INST kann verhindert werden, dass nicht zugelassene Software oder dass aufgrund fehlerhafter Übertragung oder unbefugter Manipulation verfälschte Software installiert und ausgeführt wird und dadurch die Funktion, Sicherheit und Zuverlässigkeit der betreffenden Geräteeinheit oder des Kraftfahrzeugs beeinträchtigt wird. Durch jeweiliges Vorsehen des Prüfwerts PW ist die Software zuverlässig und sicher über den virtuellen vertrauenswürdigen Kanal übertragbar, zum Beispiel von dem externen Gerät EG an das Anzeigeinstrument INST und gegebenenfalls von dem Anzeigeinstrument INST weiter an die vorgesehene Geräteeinheit.

Ferner ist das Anzeigeinstrument INST vorzugsweise dazu ausgebildet, Software und insbesondere in dem Anzeigeinstrument INST ausführbare Software in Form einzelner Programme, Software-Funktionen oder Software-Funktionsmodulen zu empfangen, zu speichern, beispielsweise in dem Datenspeicher DMEM, und diese auszuführen. Durch solche Software ist die Funktionalität des Anzeigeinstruments INST erweiterbar, ohne dass dazu eine Aktualisierung eines Betriebssystems oder einer Firmware des Anzeigeinstruments INST erforderlich ist. Vorzugsweise wird die Software in einer geschützten Umgebung oder Laufzeitumgebung ausgeführt, so dass andere Funktionen des Anzeigeinstruments INST nicht beeinträchtigt werden können. Durch die zusätzliche Software sind nachträglich beispielsweise Anzeigemöglichkeiten nachrüstbar für nachträglich in das Kraftfahrzeug eingebaute oder freigeschaltete Geräteeinheiten, also Anzeigemöglichkeiten, die vor Auslieferung des Anzeigeinstruments INST oder des Kraftfahrzeugs noch nicht berücksichtigt werden konnten. Dies betrifft insbesondere auch Geräteeinheiten von Fremdherstellern, die auf diese Weise durch Einspielen entsprechender Software in das Anzeigeinstrument INST die Anzeige ANZ und/oder die Eingabeeinheit des Anzeigeinstruments INST auch für ihre jeweilige Geräteeinheit nutzbar machen können, zum Beispiel für die Maut-On-Board-Unit OBU. Die Software kann insbesondere ein Verarbeiten und/oder eine Anzeige und/oder ein Bereitstellen von Daten umfassen und kann beispielsweise auch das Nutzen der Sicherheitsfunktionalität des Anzeigeinstruments INST umfassen, beispielsweise in Bezug auf ein Verschlüsseln, Entschlüsseln, Signieren, Überprüfen oder Authentisieren von Daten. Ferner kann auf diese Weise zum Beispiel auch anderen Geräteeinheiten das Nutzen des Druckers PR des Tachographen DTCO ermöglicht werden, indem eine entsprechende Software in dem Anzeigeinstrument INST die Datenkommunikation mit dem Tachographen DTCO abwickelt, zum Beispiel über den virtuellen vertrauenswürdigen Kanal, und anderen Geräteeinheiten einen Druckdienst bereitstellt. Entsprechend kann vorgesehen sein, auch andere Dienste bereitzustellen und so gegebenenfalls Komponenten von Geräteeinheiten für andere Geräteeinheiten nutzbar zu machen. Ferner wird die mindestens eine Schutzeinrichtung SE und insbesondere die sichere Recheneinheit SCPU und der sichere Speicher SMEM vorzugsweise auch genutzt, um die zusätzlich in das Anzeigeinstrument INST einspielbare Software entsprechend den Software-Aktualisierungen zu überprüfen und/oder zu authentisieren. Das Anzeigeinstrument INST bildet so ein "Trust-Center".

Das System weist eine offene Systemarchitektur auf, das heißt, das System ist nicht auf bestimmte vorgegebene Geräteeinheiten und externe Einheiten EE beschränkt. Durch das Vorsehen des kryptographischen Prüfwerts PW und dem dadurch möglichen virtuellen vertrauenswürdigen Kanal kann sowohl die fahrzeuginterne Datenkommunikation zwischen den Geräteeinheiten als auch die fahrzeugexterne Datenkommunikation mit externen Einheiten EE geschützt vor unbefugter Manipulation und dadurch vertrauenswürdig erfolgen. Ferner kann zusätzlich vorgesehen sein, die Nutzdaten DAT verschlüsselt zu übertragen, so dass diese vertraulich bleiben und nur von der vorgesehenen Geräteeinheit oder externen Einheit EE entschlüsselt werden kann. Insbesondere durch Ausbilden des kryptographischen Prüfwerts PW als Nachrichtenauthentisierungskode und gekürzten Nachrichtenauthentisierungskode RMAC ist eine geschützte und echtzeitfähige Datenkommunikation möglich, die die Anforderungen an die Datenkommunikation in Fahrzeugen erfüllt.

## Patentansprüche

1. System, das einen Tachographen (DTCO) und eine Maut-On-Board-Unit (OBU) als Kommunikationspartner einer Datenkommunikation umfasst, die jeweils eine Datenschnittstelle (DS) umfassen, die als eine Fahrzeugdatenbusschnittstelle ausgebildet ist, so dass die Datenkommunikation über einen Fahrzeugdatenbus (FDB) erfolgt, mit dem die Kommunikationspartner koppelbar sind und über den der Tachograph und die Maut-On-Board-Unit miteinander gekoppelt sind, und
- der Tachograph (DTCO) als ein Sender von Daten ausgebildet ist zum Ermitteln eines kryptographischen Prüfwerts (PW) abhängig von Nutzdaten (DAT), die über die Datenschnittstelle (DS) an den jeweiligen Kommunikationspartner übertragen werden sollen, und zum Senden des kryptographischen Prüfwerts (PW) zusätzlich zu den Nutzdaten (DAT) an den jeweiligen Kommunikationspartner und
- die Maut-On-Board-Unit (OBU) als ein jeweiliger Empfänger von Daten ausgebildet ist zum Empfangen von Nutzdaten (DAT) und des den Nutzdaten (DAT) zugehörigen kryptographischen Prüfwerts (PW) über die Datenschnittstelle (DS) von dem jeweiligen Kommunikationspartner und zum Überprüfen der empfangenen Nutzdaten (DAT) auf Verfälschungen abhängig von dem empfangenen kryptographischen Prüfwert (PW), wobei
- jeder der Kommunikationspartner jeweils mindestens einen sicheren Speicher (SMEM) aufweist zum Speichern mindestens eines kryptographischen Schlüssels,
- mindestens einer der Kommunikationspartner ausgebildet ist zum Erzeugen mindestens eines kryptographischen Schlüssels und zum verschlüsselten Versenden des mindestens einen erzeugten kryptographischen Schlüssels an mindestens einen der jeweiligen Kommunikationspartner,
- die Kommunikationspartner ausgebildet sind zum Empfangen und Entschlüsseln des mindestens einen verschlüsselten kryptographischen Schlüssels und zum sicheren Speichern des mindestens einen kryptographischen Schlüssels in ihrem jeweiligen sicheren Speicher (SMEM) und
- die Kommunikationspartner ausgebildet sind zum Ermitteln des kryptographischen Prüfwerts (PW) abhängig von dem mindestens einen kryptographischen Schlüssel, wobei die Kommunikationspartner ausgebildet sind zum Ermitteln des kryptographischen Prüfwerts (PW) als einen Nachrichtenauthentisierungskode abhängig von dem mindestens einen kryptographischen Schlüssel, wobei die Kommunikationspartner ausgebildet sind zum Ermitteln des kryptographischen Prüfwerts (PW) als einen gekürzten Nachrichtenauthentisierungskode (RMAC) abhängig von dem mindestens einen kryptographischen Schlüssel und wobei die Kommunikationspartner ausgebildet sind zum Übertragen des kryptographischen Prüfwerts (PW) jeweils gemeinsam mit den zugehörigen Nutzdaten (DAT) in einer Nachricht (MSG).

2. System nach Anspruch 1, bei dem die von dem Tachographen (DTCO) an die Maut-On-Board-Unit (OBU) zu sendenden und von dieser zu empfangenen Nutzdaten (DAT) Geschwindigkeitsdaten und/oder Wegstreckendaten und/oder einen aktuellen Kilometerstand umfassen, die durch den Tachographen (DTCO) oder durch mit dem Tachographen (DTCO) koppelbare Sensoren (SENS) erfassbar oder ermittelbar sind, und/oder Zeitdaten und/oder Identifikationsdaten eines Fahrers und/oder Unternehmens und/oder Fahrzeugs umfassen.

3. System nach einem der vorstehenden Ansprüche, bei dem die von der Maut-On-Board-Unit (OBU) an den Tachographen (DTCO) zu sendenden und von diesem zu empfangenen Nutzdaten (DAT) eine Zeitinformation und/oder eine Positionsinformation einer Positionsermittlungseinheit (POS) umfassen.

4. System nach einem der vorstehenden Ansprüche, das ein Anzeigeinstrument (INST) als Kommunikationspartner der Datenkommunikation umfasst, das eine Datenschnittstelle (DS) umfasst, die als die Fahrzeugdatenbusschnittstelle ausgebildet ist, so dass die Datenkommunikation über den Fahrzeugdatenbus (FDB) erfolgt, mit dem das Anzeigeinstrument (INST) koppelbar ist, und das Anzeigeinstrument (INST) ausgebildet ist zum Empfangen von Nutzdaten (DAT) und des den Nutzdaten (DAT) zugehörigen kryptographischen Prüfwerts (PW) über die Datenschnittstelle (DS) von dem jeweiligen Kommunikationspartner und zum Überprüfen der empfangenen Nutzdaten (DAT) auf Verfälschungen abhängig von dem empfangenen kryptographischen Prüfwert (PW).

5. System nach Anspruch 4, bei dem das Anzeigeinstrument (INST) als Sender von Daten ausgebildet ist zum Ermitteln des kryptographischen Prüfwerts (PW) abhängig von Nutzdaten (DAT), die über die Datenschnittstelle (DS) an den jeweiligen Kommunikationspartner übertragen werden sollen, und zum Senden des kryptographischen Prüfwerts (PW) zusätzlich zu den Nutzdaten (DAT) an den jeweiligen Kommunikationspartner.

6. System nach einem der Ansprüche 4 oder 5, bei dem das Anzeigeinstrument (INST) mindestens einen sicheren Speicher (SMEM) umfasst zum Speichern mindestens eines kryptographischen Schlüssels und/oder des aktuellen Kilometerstands und/oder von Identifikationsdaten des Fahrers und/oder Unternehmens und/oder Fahrzeugs und/oder von Einstellungsparametern von Komponenten des Fahrzeugs und/oder von Diagnosedaten des Fahrzeugs.

7. System nach einem der Ansprüche 4 bis 6, bei dem das Anzeigeinstrument (INST) mindestens eine Gehäuseschutzeinrichtung (GSE) aufweist, durch die ein Öffnen eines Gehäuses des Anzeigeinstruments (INST) erkennbar ist.

8. System nach Anspruch 7, bei dem die Gehäuseschutzeinrichtung (GSE) einen Gehäuseschalter umfasst.

9. System nach einem der Ansprüche 4 bis 8, bei dem das Anzeigeinstrument (INST) mindestens zwei Datenschnittstellen (DS) umfasst, die jeweils als die Fahrzeugdatenbusschnittstelle ausgebildet sind, und das Anzeigeinstrument (INST) eine Verbindungseinheit (VE) bildet für eine Datenkommunikation zwischen Kommunikationspartnern, die mit verschiedenen der mindestens zwei Datenschnittstellen (DS) koppelbar sind, und das Anzeigeinstrument (INST) ausgebildet ist zum Weitersenden und/oder Überprüfen und/oder Authentisieren von empfangenen Nutzdaten (DAT) und/oder zum Authentisieren der Kommunikationspartner.

10. System nach Anspruch 9, bei dem die Nutzdaten (DAT), die durch das Anzeigeinstrument (INST) überprüfbar beziehungsweise authentisierbar sind, mindestens einen Teil einer ausführbaren Software umfassen oder eine ausführbare Software bilden.

11. System nach Anspruch 10, bei dem das Anzeigeinstrument (INST) ausgebildet ist zum Ausführen der ausführbaren Software.

12. System nach einem der Ansprüche 10 oder 11, bei dem das Anzeigeinstrument (INST) ausgebildet ist zum Weitersenden der ausführbaren Software an mindestens einen der Kommunikationspartner nach erfolgreicher Überprüfung und/oder Authentisierung.

13. System nach einem der Ansprüche 4 bis 12, bei dem das Anzeigeinstrument (INST) eine Komforteinrichtungssteuereinheit (KST) und/oder eine Diagnoseschnittstelleneinheit (DIAG) und/oder eine Identifikationseinheit (PID) zum Identifizieren einer Person und/oder eine Zugangskontrolleinheit (KE) und/oder einer Wegfahrsperreinheit bildet oder einen Teil einer solchen umfasst.

14. System nach einem der vorstehenden Ansprüche, bei dem jeweils mindestens einer der Kommunikationspartner einer jeweils vorgesehenen Datenkommunikation ausgebildet ist zum sich Authentisieren gegenüber seinem jeweiligen mindestens einen Kommunikationspartner.

15. System nach einem der Ansprüche 1 bis 13, bei dem die Maut-On-Board-Unit (OBU) und das gegebenenfalls vorgesehene Anzeigeinstrument (INST) ausgebildet sind zum sich Authentisieren gegenüber dem Tachographen (DTCO) und bei erfolgreicher Authentisierung
- zum Ermöglichen der vertrauenswürdigen Datenkommunikation zwischen dem Tachographen (DTCO) einerseits und der Maut-On-Board-Unit (OBU) beziehungsweise dem gegebenenfalls vorgesehenen Anzeigeinstrument (INST) andererseits und/oder
- zum Ermöglichen der vertrauenswürdigen Datenkommunikation zwischen der Maut-On-Board-Unit (OBU) und dem gegebenenfalls vorgesehenen Anzeigeinstrument (INST) und zum andernfalls Verhindern der vertrauenswürdigen Datenkommunikation basierend auf dem Überprüfen der jeweils empfangenen Nutzdaten (DAT) abhängig von dem zugehörigen empfangenen kryptographischen Prüfwert.

16. System nach einem der Ansprüche 14 bis 15, bei dem mindestens einer der Kommunikationspartner ausgebildet ist zum automatischen erneuten Durchführen des Erzeugens und Übertragens des mindestens einen kryptographischen Schlüssels und des gegebenenfalls vorgesehenen Authentisierens abhängig von einem Eintritt mindestens eines vorgegebenen Ereignisses.

17. System nach einem der vorstehenden Ansprüche, bei dem mindestens einer der Kommunikationspartner eine Schnittstelle zu einer externen Einheit (EE) umfasst und ausgebildet ist
- zum Ermitteln eines kryptographischen Prüfwerts (PW) abhängig von Nutzdaten (DAT), die über die Schnittstelle zu der externen Einheit (EE) an die externe Einheit (EE) als Kommunikationspartner übertragen werden sollen, und zum Senden des kryptographischen Prüfwerts (PW) zusätzlich zu den Nutzdaten (DAT) an diesen Kommunikationspartner und/oder
- zum Empfangen von Nutzdaten (DAT) und des den Nutzdaten (DAT) zugehörigen kryptographischen Prüfwerts (PW) von der externen Einheit (EE) über die Schnittstelle zu der externen Einheit (EE) und zum Überprüfen der empfangenen Nutzdaten (DAT) auf Verfälschungen abhängig von dem empfangenen kryptographischen Prüfwert (PW).

18. System nach einem der vorstehenden Ansprüche, bei dem mindestens einer der Kommunikationspartner ausgebildet ist zum Verschlüsseln der zu sendenden Nutzdaten (DAT) und mindestens ein anderer der Kommunikationspartner ausgebildet ist zum Entschlüsseln der empfangenen verschlüsselten Nutzdaten (DAT).

19. System nach einem der vorstehenden Ansprüche, das eine Verkehrstelematikeinheit (VT) und/oder eine Motor-Steuereinheit (MST) zum Steuern einer Brennkraftmaschine oder mindestens eines für einen Vortrieb eines Fahrzeugs vorgesehenen Elektromotors und/oder eine Komforteinrichtungssteuereinheit (KST) und/oder eine Diagnoseschnittstelleneinheit (DIAG) und/oder eine Identifikationseinheit (PID) zum Identifizieren einer Person und/oder eine Zugangskontrolleinheit (KE) als Kommunikationspartner der Datenkommunikation umfasst, die jeweils eine Datenschnittstelle (DS) umfassen, die als die Fahrzeugdatenbusschnittstelle ausgebildet ist, so dass die Datenkommunikation über den Fahrzeugdatenbus (FDB) erfolgt, mit dem die Verkehrstelematikeinheit (VT), die Motor-Steuereinheit (MST), die Komforteinrichtungssteuereinheit (KST), die Diagnoseschnittstelleneinheit (DIAG), die Identifikationseinheit (PID) beziehungsweise die Zugangskontrolleinheit (KE) koppelbar ist.

## Claims

1. System which comprises a tachograph (DTCO) and a toll onboard unit (OBU) as communication partners for data communication, which each have a data interface (DS) which is in the form of a vehicle data bus interface, such that the data communication takes place via a vehicle data bus (FDB), to which the communication partners can be coupled, and via which the tachograph and the toll onboard unit are coupled to one another, and
- the tachograph (DTCO), as a transmitter of data, is designed to determine a cryptographic check value (PW) as a function of payload data (DAT), which is intended to be transmitted via the data interface (DS) to the respective communication partner, and to transmit the cryptographic check value (PW) in addition to the payload data (DAT) to the respective communication partner, and
- the toll onboard unit (OBU) is in the form of a respective data receiver in order to receive payload data (DAT) and the cryptographic check value (PW) associated with the payload data (DAT), via the data interface (DS) from the respective communication partner, and to check the received payload data (DAT) for corruptions, as a function of the received cryptographic check value (PW), wherein
- each of the communication partners each has at least one secure memory (SMEM) for storage of at least one cryptographic key,
- at least one of the communication partners is designed to produce at least one cryptographic key and for encrypted transmission of the at least one cryptographic key that is produced to at least one of the respective communication partners,
- the communication partners are designed to receive and decrypt the at least one encrypted cryptographic key, and for secure storage of the at least one cryptographic key in their respective secure memory (SMEM), and
- the communication partners are designed to determine the cryptographic check value (PW) as a function of the at least one cryptographic key,
wherein the communication partners are designed to determine the cryptographic check value (PW) as a message authentication code, as a function of the at least one cryptographic key, wherein the communication partners are designed to determine the cryptographic check value (PW) as a shortened message authentication code (RMAC), as a function of the at least one cryptographic key and wherein the communication partners are designed to transmit the cryptographic check value (PW) in each case together with the associated payload data (DAT) in one message (MSG).

2. System according to Claim 1, in which the payload data (DAT) to be transmitted from the tachograph (DTCO) to the toll onboard unit (OBU) and to be received from the latter comprises speed data and/or route data and/or an up-to-date mileage, which can be detected or determined by the tachograph (DTCO) or by sensors (SENS) which can be coupled to the tachograph (DTCO), and/or time data and/or identification data of a driver and/or a company and/or a vehicle.

3. System according to one of the preceding claims, in which the payload data (DAT) to be transmitted from the toll onboard unit (OBU) to the tachograph (DTCO) and to be received from the latter comprises time information and/or position information from a position-finding unit (POS).

4. The system as claimed in one of the preceding claims, which comprises a display instrument (INST) as a communication partner for data communication, which comprises a data interface (DS) which is in the form of the vehicle data bus interface, such that the data communication takes place via the vehicle data bus (FDB), to which the display instrument (INST) can be coupled, and the display instrument (INST) is designed to receive payload data (DAT) and the cryptographic check value (PW) associated with the payload data (DAT) via the data interface (DS) from the respective communication partner, and to check the received payload data (DAT) for corruptions, as a function of the received cryptographic check value (PW).

5. System according to Claim 4, in which the display instrument (INST) as a transmitter of data is designed to determine the cryptographic check value (PW) as a function of payload data (DAT) which is intended to be transmitted via the data interface (DS) to the respective communication partner, and to transmit the cryptographic check value (PW) in addition to the payload data (DAT) to the respective communication partner.

6. System according to one of Claims 4 or 5, in which the display instrument (INST) comprises at least one secure memory (SMEM) for storing at least one cryptographic key and/or the current mileage and/or identification data of the driver and/or company and/or vehicle and/or setting parameters for components in the vehicle and/or diagnosis data relating to the vehicle.

7. System according to one of Claims 4 to 6, in which the display instrument (INST) has at least one housing protective device (GSE) by means of which opening of a housing of the display instrument (INST) can be identified.

8. System according to Claim 7, in which the housing protective device (GSE) comprises a housing switch.

9. System according to one of Claims 4 to 8, in which the display instrument (INST) comprises at least two data interfaces (DS) which are each in the form of the vehicle data bus interface, and the display instrument (INST) forms a connecting unit (VE) for data communication between communication partners which can be coupled to different ones of the at least two data interfaces (DS), and the display instrument (INST) is designed to relay and/or check and/or authenticate received payload data (DAT) and/or to authenticate the communication partners.

10. System according to Claim 9, in which the payload data (DAT), which can be checked and/or authenticated by the display instrument (INST), comprises at least some of a software which can be executed, and/or forms software which can be executed.

11. System according to Claim 10, in which the display instrument (INST) is designed to execute the software which can be executed.

12. System according to one of Claims 10 or 11, in which the display instrument (INST) is designed to relay the software which can be executed to at least one of the communication partners after successful checking and/or authentication.

13. System according to one of Claims 4 to 12, in which the display instrument (INST) forms a convenience device control unit (KST) and/or a diagnosis interface unit (DIAG) and/or an identification unit (PID) for identification of a person and/or an access monitoring unit (KE) and/or an immobilizer unit, or comprises a part of such a unit.

14. The system according to one of the preceding claims, in which in each case at least one of the communication partners in respectively provided data communication is designed to authenticate itself with its respective at least one communication partner.

15. System according to one of Claims 1 to 13, in which the toll onboard unit (OBU) and the display instrument (INST) which may be provided are designed to authenticate themselves with the tachograph (DTCO) and, in the event of successful authentication,
- to allow trustworthy data communication between the tachograph (DTCO) on the one hand and the toll onboard unit (OBU) or the display instrument (INST), which may be provided, on the other hand, and/or
- to allow trustworthy data communication between the toll onboard unit (OBU) and the display instrument (INST) which may be provided, and otherwise to prevent trustworthy data communication based on the check of the respectively received payload data (DAT), as a function of the associated received cryptographic check value.

16. System according to one of Claims 14 to 15, in which at least one of the communication partners is designed to automatically once again carry out the production and the transmission of the at least one cryptographic key and the possibly provided authentication as a function of the occurrence of at least one predetermined event.

17. System according to one of the preceding claims, in which at least one of the communication partners comprises an interface to an external unit (EE), and is designed
- to determine a cryptographic check value (PW) as a function of payload data (DAT), which is intended to be transmitted to the external unit (EE), as a communication partner, via the interface to the external unit (EE), and to transmit the cryptographic check value (PW) in addition to the payload data (DAT) to this communication partner, and/or
- to receive payload data (DAT) and the cryptographic check value (PW), associated with the payload data (DAT), from the external unit (EE) via the interface to the external unit (EE), and to check the received payload data (DAT) for corruptions, as a function of the received cryptographic check value (PW).

18. System according to one of the preceding claims, in which at least one of the communication partners is designed to encrypt the payload data (DAT) to be transmitted, and at least one other of the communication partners is designed to decrypt the received encrypted payload data (DAT).

19. System according to one of the preceding claims, which comprises a traffic telematics unit (VT) and/or an engine control unit (MST) for controlling an internal combustion engine or at least one electric motor, which is provided for propulsion of a vehicle, and/or a convenience device control unit (KST) and/or a diagnosis interface unit (DIAG) and/or an identification unit (PID) for identification of a person and/or an access monitoring unit (KE) as communication partner for data communication, which in each case comprise a data interface (DS) which is in the form of the vehicle data bus interface, such that the data communication takes place via the vehicle data bus (FDB), to which the traffic telematics unit (VT), the engine control unit (MST), the convenience device control unit (KST), the diagnosis interface unit (DIAG), the identification unit (PID) and/or the access monitoring unit (KE) can be coupled.

## Revendications

1. Système, qui comprend un tachygraphe (DTCO) et une unité de péage embarquée (OBU) en tant que partenaires de communication d'une communication de données qui comprennent respectivement une interface de données (DS) qui est constituée en tant qu'interface de bus de données de véhicule de telle sorte que la communication de données s'effectue par le biais d'un bus de données de véhicule (FDB) avec lequel les partenaires de communication peuvent être couplés et par le biais duquel le tachygraphe et l'unité de péage embarquée sont couplés l'un à l'autre, et
- le tachygraphe (DTCO) est constitué en tant qu'émetteur de données pour la détermination d'une valeur de contrôle cryptographique (PW) en fonction de données utiles (DAT) qui doivent être transmises via l'interface de données (DS) au partenaire de communication respectif, et pour l'émission de la valeur de contrôle cryptographique (PW), en plus des données utiles (DAT), vers le partenaire de communication respectif, et
- l'unité de péage embarquée (OBU) est constituée en tant que récepteur respectif de données pour la réception de données utiles (DAT) et de la valeur de contrôle cryptographique (PW) appartenant aux données utiles (DAT) via l'interface de données (DS) en provenance du partenaire de communication respectif, et pour la vérification des données utiles (DAT) reçues pour détecter des falsifications en fonction de la valeur de contrôle cryptographique (PW) reçue,
- chacun des partenaires de communication présente respectivement au moins une mémoire sécurisée (SMEM) pour le stockage d'au moins une clé cryptographique,
- au moins un des partenaires de communication est constitué pour la production d'au moins une clé cryptographique et pour l'émission cryptée de la clé cryptographique produite au moins au nombre de un vers au moins un des partenaires de communication respectifs,
- les partenaires de communication sont constitués pour la réception et le décryptage de la clé cryptographique cryptée au moins au nombre de un et pour le stockage sécurisé de la clé cryptographique au moins au nombre de un dans leur mémoire sécurisée (SMEM) respective, et
- les partenaires de communication sont constitués pour la détermination de la valeur de contrôle cryptographique (PW) en fonction de la clé cryptographique au moins au nombre de un, les partenaires de communication étant constitués pour la détermination de la valeur de contrôle cryptographique (PW) en tant que code d'authentification de messages en fonction de la clé cryptographique au moins au nombre de un, les partenaires de communication étant constitués pour la détermination de la valeur de contrôle cryptographique (PW) en tant que code d'authentification de messages abrégé (RMAC) en fonction de la clé cryptographique au moins au nombre de un, et les partenaires de communication étant constitués pour la transmission de la valeur de contrôle cryptographique (PW) respectivement conjointement avec les données utiles (DAT) correspondantes dans un message (MSG).

2. Système selon la revendication 1, dans lequel les données utiles (DAT) devant être envoyées par le tachygraphe (DTCO) à l'unité de péage embarquée (OBU) et devant être reçues par celle-ci comprennent des données de vitesse et/ou des données de parcours et/ou un kilométrage actuel qui peuvent être détectés ou déterminés par le tachygraphe (DTCO) ou par des capteurs (SENS) pouvant être couplés au tachygraphe (DTCO), et/ou des données temporelles et/ou des données d'identification d'un conducteur et/ou d'une entreprise et/ou d'un véhicule.

3. Système selon l'une des revendications précédentes, dans lequel les données utiles (DAT) devant être envoyées par l'unité de péage embarquée (OBU) au tachygraphe (DTCO) et devant être reçues par celui-ci comprennent une information temporelle et/ou une information de position d'une unité de détermination de position (POS).

4. Système selon l'une des revendications précédentes, qui comprend un instrument d'affichage (INST) en tant que partenaire de communication de la communication de données, qui comprend une interface de données (DS) qui est constituée en tant qu'interface de bus de données de véhicule de telle sorte que la communication de données s'effectue via le bus de données de véhicule (FDB) auquel l'instrument d'affichage (INST) peut être couplé, et l'instrument d'affichage (INST) est couplé pour la réception de données utiles (DAT) et de la valeur de contrôle cryptographique (PW) appartenant aux données utiles (DAT) via l'interface de données (DS) en provenance du partenaire de communication respectif, et pour la vérification des données utiles (DAT) reçues pour détecter des falsifications en fonction de la valeur de contrôle cryptographique (PW) reçue.

5. Système selon la revendication 4, dans lequel l'instrument d'affichage (INST) est constitué en tant qu'émetteur de données pour la détermination de la valeur de contrôle cryptographique (PW) en fonction de données utiles (DAT) qui doivent être transmises via l'interface de données (DS) au partenaire de communication respectif, et pour l'émission de la valeur de contrôle cryptographique (PW) en plus des données utiles (DAT) vers le partenaire de communication respectif.

6. Système selon l'une des revendications 4 ou 5, dans lequel l'instrument d'affichage (INST) comprend au moins une mémoire sécurisée (SMEM) pour le stockage d'au moins une clé cryptographique et/ou du kilométrage actuel et/ou de données d'identification du conducteur et/ou de l'entreprise et/ou du véhicule et/ou de paramètres de réglage de composants du véhicule et/ou de données de diagnostic du véhicule.

7. Système selon l'une des revendications 4 à 6, dans lequel l'instrument d'affichage (INST) présente au moins un équipement de protection de boîtier (GSE) permettant de détecter une ouverture d'un boîtier de l'instrument d'affichage (INST).

8. Système selon la revendication 7, dans lequel l'équipement de protection de boîtier (GSE) comprend un connecteur de boîtier.

9. Système selon l'une des revendications 4 à 8, dans lequel l'instrument d'affichage (INST) comprend au moins deux interfaces de données (DS) qui sont constituées respectivement en tant qu'interface de bus de données de véhicule, et l'instrument d'affichage (INST) forme une unité de raccordement (VE) pour une communication de données entre des partenaires de communication qui peuvent être couplés à différentes interfaces de données (DS) des interfaces de données (DS) au moins au nombre de deux, et l'instrument d'affichage (INST) est constitué pour la poursuite de l'émission et/ou la vérification et/ou l'authentification de données utiles (DAT) reçues et/ou pour l'authentification des partenaires de communication.

10. Système selon la revendication 9, dans lequel les données utiles (DAT) qui peuvent être vérifiées ou respectivement authentifiées par l'instrument d'affichage (INST) comprennent au moins une partie d'un logiciel exécutable ou forment un logiciel exécutable.

11. Système selon la revendication 10, dans lequel l'instrument d'affichage (INST) est constitué pour l'exécution du logiciel exécutable.

12. Système selon l'une des revendications 10 ou 11, dans lequel l'instrument d'affichage (INST) est constitué pour la poursuite de l'émission du logiciel exécutable vers au moins un des partenaires de communication une fois la vérification et/ou l'authentification effectuées avec succès.

13. Système selon l'une des revendications 4 à 12, dans lequel l'instrument d'affichage (INST) forme une unité de commande d'équipement de confort (KST) et/ou une unité d'interface de diagnostic (DIAG) et/ou une unité d'identification (PID) pour l'identification d'une personne et/ou une unité de contrôle d'accès (KE) et/ou une unité de blocage de démarrage ou comprend une partie d'une telle unité.

14. Système selon l'une des revendications précédentes, dans lequel respectivement au moins un des partenaires de communication d'une communication de données respectivement prévue est constitué pour s'authentifier vis-à-vis de son partenaire de communication respectif au moins au nombre de un.

15. Système selon l'une des revendications 1 à 13, dans lequel l'unité de péage embarquée (OBU) et l'instrument d'affichage (INST) éventuellement prévu sont constitués pour s'authentifier vis-à-vis du tachygraphe (DTCO) et, en cas d'authentification réussie,
- pour permettre la communication de données fiable entre le tachygraphe (DTCO) d'un côté et l'unité de péage embarquée (OBU) ou respectivement l'instrument d'affichage (INST) éventuellement prévu de l'autre côté et/ou
- pour permettre la communication de données fiable entre l'unité de péage embarquée (OBU) et l'instrument d'affichage (INST) éventuellement prévu
et pour empêcher par ailleurs la communication de données fiable sur la base de la vérification des données utiles (DAT) respectivement reçues en fonction de la valeur de contrôle cryptographique reçue correspondante.

16. Système selon l'une des revendications 14 à 15, dans lequel au moins un des partenaires de communication est constitué pour la réalisation renouvelée automatique de la production et de la transmission de la clé cryptographique au moins au nombre de un et de l'authentification éventuellement prévue en fonction d'une survenue d'au moins un événement prédéfini.

17. Système selon l'une des revendications précédentes, dans lequel au moins un des partenaires de communication comprend une interface avec une unité externe (EE) et est constitué
- pour la détermination d'une valeur de contrôle cryptographique (PW) en fonction de données utiles (DAT) qui doivent être transmises via l'interface avec l'unité externe (EE) à l'unité externe (EE) en tant que partenaire de communication, et pour l'émission de la valeur de contrôle cryptographique (PW) en plus des données utiles (DAT) vers ce partenaire de communication et/ou
- pour la réception de données utiles (DAT) et de la valeur de contrôle cryptographique (PW) appartenant aux données utiles (DAT) en provenance de l'unité externe (EE) via l'interface avec l'unité externe (EE) et pour la vérification des données utiles (DAT) reçues pour détecter des falsifications en fonction de la valeur de contrôle cryptographique (PW) reçue.

18. Système selon l'une des revendications précédentes, dans lequel au moins un des partenaires de communication est constitué pour le cryptage des données utiles (DAT) à émettre et au moins un autre des partenaires de communication est constitué pour le décryptage des données utiles (DAT) cryptées reçues.

19. Système selon l'une des revendications précédentes, qui comprend une unité télématique routière (VT) et/ou une unité de commande de moteur (MST) pour la commande d'un moteur à combustion interne ou au moins d'un moteur électrique prévu pour la propulsion d'un véhicule et/ou une unité de commande d'équipement de confort (KST) et/ou une unité d'interface de diagnostic (DIAG) et/ou une unité d'identification (PID) pour l'identification d'une personne et/ou une unité de contrôle d'accès (KE) en tant que partenaire de communication de la communication de données, qui comprennent respectivement une interface de données (DS) qui est constituée en tant qu'interface de bus de données de véhicule de telle sorte que la communication de données s'effectue via le bus de données de véhicule (FDB) auquel l'unité télématique routière (VT), l'unité de commande de moteur (MST), l'unité de commande d'équipement de confort (KST), l'unité d'interface de diagnostic (DIAG), l'unité d'identification (PID) ou respectivement l'unité de contrôle d'accès (KE) peut être couplée.
